# EUROPÄISCHE PATENTSCHRIFT

(11) **EP 3 808 536 B1**
(45) Veröffentlichungstag und Bekanntmachung des Hinweises auf die Patenterteilung: **20.10.2021**
(21) Anmeldenummer: 20200756.3
(22) Anmeldetag: 08.10.2020
(51) Int. Cl.: B29C 55/06

(54) **VERFAHREN ZUR EINSTELLUNG EINES ARBEITSPUNKTS EINER FOLIENRECKANLAGE UND FOLIENRECKANLAGE ZUR HERSTELLUNG EINER KUNSTSTOFFFOLIE**
METHOD FOR ADJUSTING A WORKING POINT OF A FILM STRETCHING SYSTEM AND FILM STRETCHING SYSTEM FOR PRODUCING A PLASTIC FILM
PROCÉDÉ DE RÉGLAGE D'UN POINT DE TRAVAIL D'UNE INSTALLATION D'ÉTIRAGE DE FEUILLE ET INSTALLATION D'ÉTIRAGE DE FEUILLE DESTINÉE À LA FABRICATION D'UN FEUILLE EN MATIÈRE PLASTIQUE

(30) Priorität: 15.10.2019 DE 102019127778
(43) Veröffentlichungstag der Anmeldung: 21.04.2021
(73) Patentinhaber: Brückner Maschinenbau GmbH & Co. KG, 83313 Siegsdorf (DE)
(72) Erfinder: Zintz, Marion, 83377 Vachendorf (DE); Zintz, Wolfgang, 83377 Vachendorf (DE); Barth, Thomas, 83026 Rosenheim (DE)
(74) Vertreter: Flach Bauer Stahl Patentanwälte Partnerschaft mbB

(56) Entgegenhaltungen:
- DE-A1- 2 304 243
- DE-A1-102016 112 121

## Beschreibung

Die Erfindung betrifft ein Verfahren zur Einstellung eines Arbeitspunkts einer Folienreckanlage und eine Folienreckanlage zur Herstellung einer Kunststofffolie. Eine Folienreckanlage umfasst im Rahmen dieser Erfindung eine Reckanordnung, die eine Längsreckanlage zur Streckung der Folie in Längsrichtung als auch optional eine Querreckanlage zur Streckung der Folie in Querrichtung umfasst. Eine Längsreckanlage zur Streckung der Folie in Längsrichtung wird üblicherweise als MDO bezeichnet. Bei einer solchen Längsreckanlage ist das Reckverhältnis einstellbar. Aber auch eine Castanlage kann eine Längsreckanlage zur Streckung der Folie in Längsrichtung sein. Das Reckverhältnis ist hier nicht einstellbar. Eine Querreckanlage zur Streckung der Folie in Querrichtung wird üblicherweise als TDO bezeichnet und kann optional noch vorgesehen sein.

Zur Herstellung von Folien werden die Ausgangsstoffe meistens einem Extruder zugeführt und in diesem durch Aufheizen verflüssigt. Diese Kunststoffschmelze wird dann durch ein Breitschlitzwerkzeug, welches auch als Breitschlitzdüse bezeichnet werden kann, hindurchgepresst. Diese Kunststoffschmelze wird anschließend auf eine gekühlte Walze (= Kühlwalze oder Chill-Roll) angelegt bzw. ausgegeben.

Im Anschluss daran wird die auf die Kühlwalze ausgegebene Kunststoffschmelze, die auch als Castfilm bzw. Schmelzefilm bezeichnet werden kann, über weitere Walzen zusätzlichen Einrichtungen (Reckanordnung) zugeführt, die den Castfilm in Längsrichtung und/oder in Querrichtung verstrecken (= Recken). Diese weiteren Walzen sind unterschiedlich weit vom Boden beabstandet, so dass der Castfilm einen mäanderförmigen Verlauf aufweist. Diese weiteren Walzen können auch unterschiedliche Drehgeschwindigkeiten haben und/oder unterschiedlich temperiert sein. Nach der Reckanordnung wird der Kunststofffilm aufgewickelt.

Mittels Folienreckanlagen können in kürzester Zeit unterschiedliche Arten von Folien (Zusammensetzung, Dicke, usw.) produziert werden. Die Änderung dieser Produktionseigenschaften erfolgt über ein Bedienterminal, über welches der Benutzer die entsprechenden Zielparameter eingibt. Die Foliendicke hängt dabei maßgeblich von der Ausstoßmenge der Extruderanordnung und der Anlagengeschwindigkeit ab. Eine höhere Anlagengeschwindigkeit bei gleichbleibender Ausstoßmenge resultiert in einer dünneren Kunststofffolie. Eine verringerte Anlagengeschwindigkeit bei gleichbleibender Ausstoßmenge resultiert in einer dickeren Kunststofffolie. Der Bediener der Folienreckanlage muss derzeit alle diese Parameter miteinander umrechnen und die entsprechenden Sollwertvorgaben für diese Parameter eingeben, damit er eine Kunststofffolie gemäß seinen Vorstellungen erhält. Ein derartiges umrechnen dieser Größen ist allerdings fehleranfällig.

Aus der DE 10 2016 112 121 A1 ist eine verbesserte Steuerungsvorrichtung zur Herstellung von Kunststoff-Folien, sowie ein zugehöriges verbessertes Verfahren bekannt. Dabei ist die Steuerungsvorrichtung zweistufig aufgebaut. Sie umfasst ein Sensormodul und/oder ein Sensormodell zum einen und ein Prozessmodul und/oder ein Prozessmodell zum anderen. Das maschinenabhängige Sensormodul und/oder Sensormodell und das produktionsabhängige Prozessmodul und/oder Prozessmodell sind miteinander über Produktionsgrößen verknüpfbar. Über das Sensormodul und/oder Sensormodell sind einstellbare Maschinengrößen mit anlagenseitigen Produktionsgrößen verbunden oder verknüpft.

Die Aufgabe der hier vorliegenden Erfindung ist es daher ein Verfahren zum Einstellen eines Arbeitspunktes für eine Folienreckanlage zur Herstellung einer Kunststofffolie zu schaffen, wobei mögliche Fehler durch einen Bediener der Folienreckanlage auf ein Minimum reduziert werden sollen.

Die Aufgabe wird durch das Verfahren zum Einstellen des Arbeitspunktes gemäß dem Anspruch 1 gelöst. In Anspruch 15 wird eine entsprechende Folienreckanlage beschrieben, mit welcher der Arbeitspunkt eingestellt werden kann. In den Ansprüchen 2 bis 14 werden vorteilhafte Ausgestaltungen des erfindungsgemäßen Verfahrens beschrieben.

Die erfindungsgemäße Lösung sieht eine Folienreckanlage vor, die eine Chill-Roll umfasst. Weiterhin ist eine Extruderanordnung und eine Düse, insbesondere in Form einer Breitschlitzdüse vorgesehen. Die Düse ist nach der Extruderanordnung angeordnet. Über die Düse wird eine Kunststoffschmelze auf die Chill-Roll ausgegeben. Eine Reckanordnung dient zum Recken der Folie. Diese kann zumindest eine Längsreckanlage mit zumindest einer und vorzugsweise mehreren Reckstufen umfassen. Diese erlauben ein Recken der Kunststofffolie in Längsrichtung. Die Reckanordnung ist dabei nach der Chill-Roll angeordnet. Optional umfasst die Reckanordnung auch noch eine Querreckanlage, die insbesondere nach der Längsreckanlage angeordnet und dazu ausgebildet ist, die Kunststofffolie in Querrichtung zu Recken. Weiterhin ist eine Motoranordnung vorgesehen, die zum Antreiben der Chill-Roll und der Reckanordnung dient. Die Motoranordnung kann hierfür einen oder mehrere Elektro-Motoren umfassen. Weiterhin ist ein Bedienterminal vorgesehen. Bei dem Bedienterminal handelt es sich insbesondere um eine Eingabe- und/oder Ausgabevorrichtung. Hierbei kann es sich um eine Tastatur und einen Monitor handeln. Auch ein Touchscreen kann zur Anwendung kommen. Das Bedienterminal umfasst auch noch eine Computereinheit. Ein Bediener kann am Bedienterminal entsprechende Eingaben machen und sich Ergebnisse angezeigt bekommen lassen. Weiterhin ist eine Speichereinrichtung vorgesehen. Es gibt auch eine Steuereinrichtung, die dazu ausgebildet ist, um die Motoranordnung, die Extruderanordnung und das Bedienterminal anzusteuern.

Der einzustellende Arbeitspunkt ist durch miteinander verknüpfte Produktionsgrößen der Folienreckanlage definiert. Diese Produktionsgrößen sind dabei über vorzugsweise lineare Beziehungen miteinander verknüpft. Ändert man eine Produktionsgröße, dann muss zumindest eine weitere oder genau eine weitere Produktionsgröße ebenfalls geändert werden. So ist eine erste Produktionsgröße, die die Dicke der fertiggestreckten Kunststofffolie beschreibt mit einer zweiten Produktionsgröße verknüpft, die die Kunststoff-Ausgabemenge der Extruderanordnung beschreibt und mit einer dritten Produktionsgröße, die die Anlagengeschwindigkeit beschreibt.

Wie beschrieben handelt es sich bei der ersten Produktionsgröße um eine Dicke der fertiggestreckten Kunststofffolie. Bei der Dicke handelt es sich insbesondere um die Dicke, die die Kunststofffolie beim Aufwickeln umfasst. Die Dicke kann dabei in einem Bereich zwischen einer minimal zulässigen Dicke (darunter würde die Folie häufig einreißen) und einer maximal zulässigen Dicke (darüber könnte die Folie nicht mehr wie gewünscht verstreckt werden) definiert werden. Die erste Produktionsgröße ist daher zwischen diesen beiden Grenzwerten einstellbar. Bei der zweiten Produktionsgröße handelt es sich um die Kunststoff-Ausgabemenge der Extruderanordnung. Grundsätzlich kann es sich hierbei um die Netto-Ausgabemenge oder um die Brutto-Ausgabemenge handeln. Die Brutto-Ausgabemenge umfasst dabei die gesamte Ausgabemenge, wohingegen die Netto-Ausgabemenge häufig niedriger ist. Die Netto-Ausgabemenge berücksichtigt daher bereits einen Randbereich der Kunststofffolie, welcher häufig abgeschnitten wird. Beispielsweise können bei Einsatz einer optionalen Querreckanlage am Randbereich Kluppen angreifen, um die Kunststofffolie durch die Folienreckanlage zu ziehen. Dieser Randbereich der Kunststofffolie wird weggeschnitten. Der abgeschnittene Randbereich wird entweder entsorgt oder erneut, je nach Folientyp, der Extruderanordnung zugeführt. In diesem Fall wird der Randbereich vorher zerkleinert und der Extruderanordnung müsste weniger unbenütztes Material aus einem Vorratsbehälter zugeführt werden. Die zweite Produktionsgröße ist ebenfalls in einem Bereich zwischen einer minimal zulässigen Kunststoff-Ausgabemenge und einer maximal zulässigen Ausgabemenge einstellbar. Die dritte Produktionsgröße ist die Anlagengeschwindigkeit der Folienreckanlage. Vorzugsweise handelt es sich bei der Anlagengeschwindigkeit um die Geschwindigkeit (zum Beispiel m/min) mit welcher die fertig gereckte Kunststofffolie am Ende aufgewickelt wird. Die dritte Produktionsgröße ist im Bereich zwischen einer minimal zulässigen Anlagengeschwindigkeit und einer maximal zulässigen Anlagengeschwindigkeit einstellbar.

Das Verfahren umfasst mehrere Verfahrensschritte. In einem ersten Verfahrensschritt wird eine Eingabe durch das Bedienterminal erfasst. Diese Eingabe weist einen Zielwert für die erste, zweite oder die dritte Produktionsgröße auf. Dabei wird vorzugsweise genau ein Zielwert eingegeben. Im Anschluss daran wird ein Einstellwert für die jeweils beiden anderen Produktionsgrößen festgelegt. Dieses Festlegen erfolgt für eine oder beide anderen Produktionsgrößen automatisiert und zwar derart, dass der Zielwert erreicht wird. Nachdem alle drei Produktionsgrößen über eine mathematische Beziehung miteinander verknüpft sind, können bei Vorgeben eines Zielwertes die beiden anderen Produktionsgrößen entsprechend festgelegt werden. Hierbei gibt es eine Vielzahl von Lösungen für die beiden anderen Produktionsgrößen, um den Zielwert für die ausgewählte Produktionsgröße zu erreichen. Grundsätzlich könnten für verschiedene Zielwerte entsprechende Einstellwerte aus einer Lookup-Tabelle geladen werden. Diese Lookup-Tabelle kann in der Speichereinrichtung gespeichert sein. Die Einstellwerte können Erfahrungswerte sein, die zusammen mit dem eigegebenen Zielwert dazu führen, dass die Folienreckanlage in einem sicheren Betriebsbereich betrieben wird. Insbesondere könnten bei Eingabe eines Zielwerts für eine Produktionsgröße diejenigen Einstellwerte für die beiden anderen Produktionsgrößen geladen werden, die bereits häufig genutzt wurden. So können diese Einstellwerte direkt antizipiert werden. Grundsätzlich könnte einer der beiden Einstellwerte über das Bedienterminal eingegeben werden, sodass lediglich der weitere zweite Einstellwert automatisiert festgelegt (berechnet) wird.

In einem weiteren Verfahrensschritt wird die Motoranordnung und die Extruderanordnung durch die Steuereinrichtung derart angesteuert, dass der Arbeitspunkt bestehend aus dem gewünschten Zielwert für eine Produktionsgröße und den festgelegten beiden Einstellwerten für die beiden anderen Produktionsgrößen erreicht wird. Ein aufwendiges manuelles Umrechnen, welches fehleranfällig ist, entfällt dabei. Die Folienreckanlage wird daher immer in einem zulässigen Arbeitsbereich betrieben.

Um weitere Fehler zu vermeiden, kann vor oder nach dem Verfahrensschritt Festlegen noch der Verfahrensschritt Analysieren ausgeführt werden. In diesem Verfahrensschritt wird überprüft, ob der ausgewählte Zielwert für die erste, zweite oder dritte Produktionsgröße in dem zulässigen Bereich liegt. Dieser zulässige Bereich kann beispielsweise in der Speichereinrichtung gespeichert sein. So kann dieser beispielsweise eine minimale Dicke von 10 µm bis hin zu einer maximalen Dicke von 60 µm um-fassen. Die Anlagengeschwindigkeit kann z.B. ebenfalls zwischen 100 m/min und 600 m/min einstellbar sein. Weiterhin kann die Ausgabemenge der Extruderanordnung z.B. zwischen 1.000 kg/Std. bis hin zu 7.000 kg/Std. einstellbar sein. Diese Bereiche für die minimal und maximal zulässigen Produktionsgrößen sind allerdings von Anlage zu Anlage verschieden. Befindet sich ein Zielwert außerhalb des jeweiligen Bereichs, dann ist die Steuereinrichtung dazu ausgebildet, um das Bedienterminal derart anzusteuern, dass dieses eine Fehlermeldung oder einen entsprechenden Hinweis ausgibt. Im Anschluss daran kann der Verfahrensschritt Erfassen erneut ausgeführt und der Benutzer wird aufgefordert einen neuen Zielwert einzugeben.

Die Einstellwerte, also die Produktionsgrößen sind vorzugsweise über lineare Beziehungen miteinander verknüpft. Insbesondere ist die Foliendicke (erste Produktionsgröße) von der Ausgabemenge pro Zeiteinheit der Extruderanordnung (zweite Produktionsgröße) und der Anlagengeschwindigkeit (dritte Produktionsgröße) abhängig. Der Zielwert für die erste Produktionsgröße kann dadurch erreicht werden, dass der Einstellwert für die zweite Produktionsgröße unverändert bleibt und der Einstellwert für die dritte Produktionsgröße geändert wird. Grundsätzlich könnte auch der Einstellwert für die zweite Produktionsgröße geändert und der Einstellwert für die dritte Produktionsgröße unverändert belassen werden. Es könnten auch beide Einstellwerte verändert werden. Nichts anderes gilt auch für den Zielwert der zweiten und der dritten Produktionsgröße.

Das Festlegen der Einstellwerte kann unterschiedlich erfolgen. Wie bereits erläutert, können die Einstellwerte aus einer Lookup-Tabelle der Speichereinrichtung entnommen werden. Auch wurde erläutert, dass einer der beiden Einstellwerte über das Bedienterminal eingegeben werden kann, sodass lediglich der weitere zweite Einstellwert automatisiert festgelegt (berechnet) wird. Grundsätzlich könnten auch beide Einstellwerte automatisiert (ohne eine Lookup-Tabelle) festgelegt werden. In diesem Fall würde das Festlegen des entsprechenden Einstellwerts unter anderem derart erfolgen, dass eine Reserve hin zu den maximal möglichen Einstellwerten verbleibt. Diese Reserve kann fest vorgegeben sein und ggf. von einem gewählten Profil abhängen mit dem die Folienreckanlage betrieben wird (z.B. Energiesparmodus, Normaler Betriebsmodus, usw). Sie kann auch dynamisch in Abhängigkeit von (gemessenen) Betriebsparametern (z.B. Anlagentemperatur, Anlagenbetriebsdauer, zu produzierender Folientyp, Leistungsaufnahme, Zeitdauer seit letzter Wartung) geändert werden.

In diesem Fall würde der Einstellwert für die erste Produktionsgröße vorzugsweise derart gewählt, dass er mindestens 15%, 20%, 25%, 30%, 35%, 40%, oder mehr als 45% von der maximal zulässigen Dicke der fertig gereckten Kunststofffolie in Richtung der minimal zulässigen Dicke der fertig gereckten Kunststofffolie beabstandet ist. Eine Kunststofffolie, deren Dicke zu nahe an die maximalen Grenzwerte herankommt, könnte dann nicht sofort produziert werden (z.B. sinnvoll bei Anlagenhochlauf). Selbiges kann auch für den Einstellwert der zweiten Produktionsgröße gelten. Dieser ist vorzugsweise derart gewählt, dass er mindestens 15%, 20%, 25%, 30%, 35%, 40% oder mehr als 45% von der maximal zulässigen Kunststoff-Ausgabemenge der Extruderanordnung in Richtung der minimal zulässigen Kunststoff-Ausgabemenge der Extruderanordnung beabstandet ist. In diesem Fall wird sichergestellt, dass die Extruder der Extruderanordnung nicht zu nahe an ihrem Maximum arbeiten und ggf. überhitzen. Nichts anderes kann auch für den Einstellwert der dritten Produktionsgröße gelten. Dieser ist vorzugsweise derart gewählt, dass er mindestens 15%, 20%, 25%, 30% 35%, 40% oder mehr als 45% von der maximal zulässigen Anlagengeschwindigkeit der Folienreckanlage in Richtung der minimal zulässigen Anlagengeschwindigkeit beabstandet ist.

Dadurch wird eine bessere Rücksicht auf die mechanische Limitierung der Anlage und die Prozessgrenzen genommen und erreicht, dass stets eine Reserve zu den maximal möglichen Einstellwerten verbleibt, wodurch der Verschleiß der Folienreckanlage bei der Herstellung der Kunststofffolie minimal gehalten wird. Diese Werte können im laufenden Betrieb entsprechend in Richtung zu den maximalen Einstellwerten erhöht werden.

Es wäre auch möglich, dass die Einstellwerte aus einer Look-Up-Tabelle in der Speichereinrichtung entnommen werden. Für jeden Zielwert jeder Produktionsgröße sind Einstellwerte der beiden anderen Produktionsgrößen vorgegeben und in der Speichereinrichtung abgespeichert. Vorzugsweise sollte der Einstellwert auch derart gewählt werden, dass er hin zum Minimum der möglichen Einstellwerte beabstandet ist. So sollte der Einstellwert für die erste Produktionsgröße vorzugsweise derart gewählt werden, dass er mindestens 15%, 20%, 25%, 30%, 35%, 40% oder mehr als 45% von der minimal zulässigen Dicke der fertig gereckten Kunststofffolienrichtung in Richtung der maximal zulässigen Dicke der fertig gereckten Kunststofffolie beabstandet ist. Nichts anderes könnte auch für den Einstellwert der zweiten und der dritten Produktionsgröße gelten.

Vorzugsweise wird ein entsprechender zulässiger Arbeitsbereich auf dem Bedienterminal angezeigt. Dieser wird weiter vorzugsweise in Form einer zweidimensionalen Darstellung abgebildet. Hierzu werden die zweite Produktionsgröße auf einer ersten Achse und die dritte Produktionsgröße auf einer zweiten Achse aufgetragen. Es wird weiterhin eine Umrandung hinzugefügt, wobei sämtliche zulässigen Arbeitspunkte innerhalb bzw. auf der Umrandung liegen. Es können weiterhin Geraden für sämtliche erste Produktionsgrößen eingezeichnet werden, die allesamt einen gemeinsamen Ursprung haben (am Schnittpunkt der ersten und der zweiten Achse) und sich von dort in unterschiedliche Richtungen weg erstrecken. Alle ersten Produktionsgrößen, die auf einer gemeinsamen Geraden liegen, haben denselben Wert. Die Werte für die zweite und dritte Produktionsgröße sind allerdings unterschiedlich. Erste Produktionsgrößen auf verschiedenen Geraden haben verschiedene Werte.

Der berechnete Arbeitspunkt kann dabei innerhalb der Umrandung eingezeichnet werden. Ein Bediener erkennt sofort wie weit dieser Arbeitspunkt von der Umrandung beabstandet ist und kann daher die Reserveleistung der Folienreckanlage bezüglich des Durchsatzes sehr genau abschätzen. Er weiß sofort, ob die Geschwindigkeit bzw. die Ausgabemenge unter Beibehaltung der Foliendicke noch erhöht werden kann. In Abhängigkeit der Auftragslage kann daher die Produktionsgeschwindigkeit erhöht oder verringert werden (um Verschleiß zu reduzieren, Rohstoffverbrauch zu definieren oder eine Energieersparnis zu erreichen).

Grundsätzlich können die dargestellten Verfahrensschritte "Erfassen" und "Festlegen" jederzeit wiederholt werden, wobei ein neuer Zielwert bzw. zumindest ein geänderter Einstellwert vorgegeben werden kann. Im Anschluss daran kann ein geänderter Arbeitspunkt, insbesondere zusätzlich zum vorherigen Arbeitspunkt, eingezeichnet werden. Dieser geänderte Arbeitspunkt kann sich, neben seiner Position bezüglich Farbe, Größe und/oder Form von dem vorherigen Arbeitspunkt unterscheiden.

Bevorzugt kann auch ein Einstellwert für weitere Änderungen gesperrt werden. So kann z.B. ein Einstellwert für die dritte Produktionsgröße auf einen festen Wert eingestellt werden (vorgegebene Anlagengeschwindigkeit). Bei Eingabe eines (neuen) Zielwerts für die erste Produktionsgröße (Foliendicke) wird automatisch lediglich die Ausgabemenge der Extruderanordnung festgelegt und angepasst. Es könnte auch die erste Produktionsgröße (Dicke der Kunststofffolie) gesperrt werden, so dass ein Bediener Folienreckanlage diese Größe nicht verändern kann, wohingegen bei Vorgeben einer weiteren Zielgröße z.B. für die weitere Ausgabemenge oder die Anlagengeschwindigkeit lediglich die andere Produktionsgröße geändert wird. Eine solche Sperre könnte durch eine entsprechende Betätigung einer Schaltfläche und/oder durch Eingabe eines Passworts aufgehoben werden.

Die Frage, welcher Einstellwert für welche Produktionsgröße 20, 21, 22 nach Eingabe des Zielwerts für eine Produktionsgröße 20, 21, 22 gesperrt wird, kann von einer Auswertung der vergangenen Einstellungen abhängen. So wird insbesondere derjenige Einstellwert für diejenige Produktionsgröße 20, 21, 22 gesperrt, der in der Vergangenheit bei Auswahl der derselben Produktionsgröße 20, 21, 22 als Zielwert ebenfalls gesperrt wurde.

Würde ein Zielwert für die dritte Produktionsgröße 22 vorgegeben werden, dann könnte z.B. der Einstellwert für die erste Produktionsgröße 20 gesperrt werden. Beim Hochlauf der Folienreckanlage (Ramping) wurde die Dicke der fertig gereckten Kunststofffolie 2 konstant gehalten werden (Einstellwert für die erste Produktiongsgröße 20 ist gesperrt) und lediglich die zweite Produktionsgröße 21 müsste in Abhängigkeit der gemessenen Anlagengeschwindigkeit angepasst werden.

Die dritte Produktionsgröße umfasst vorzugsweise eine erste und eine zweite Subgröße. Die erste Subgröße ist die Geschwindigkeit mit welcher sich die Chill-Roll dreht (z.B. m/min) und die zweite Subgröße ist das Längsreckverhältnis. Eine Multiplikation dieser beiden Subgrößen ergibt die dritte Produktionsgröße. Grundsätzlich kann im Verfahrensschritt "Sperren" die gesamte dritte Produktionsgröße gegen Änderungen gesperrt werden. Es wäre auch möglich, dass lediglich die erste bzw. die zweite Subgröße gegenüber Änderungen gesperrt wird. So kann beispielsweise das Längsreckverhältnis als unveränderlich für die Produktion vorgegeben werden. Grundsätzlich kann die Längsreckanlage der Reckanordnung auch mehrere Reckstufen in Längsrichtung umfassen. In diesem Fall würde die zweite Subgröße aus einer Multiplikation der einzelnen Reckverhältnisse gebildet werden. Grundsätzlich kann die gesamte zweite Subgröße gegenüber Veränderungen gesperrt werden oder es könnten auch Reckverhältnisse einzelner Reckstufen gegenüber einer Veränderung gesperrt werden. Handelt es sich bei der Längsreckanlage um eine Castanlage, dann wäre das Reckverhältnis konstant und könnte nicht geändert werden.

Über das Bedienterminal kann auch eine sogenannte "Ramping-Zeit" erfasst werden. Dieser Wert gibt die Zeitdauer an, wie lange es dauert, bis die Folienreckanlage von einem Arbeitspunkt auf einen neuen Arbeitspunkt umgestellt wird. Die Änderungen bezüglich der Ausgabemenge der Extruderanordnung und die Änderungen bezüglich der Anlagengeschwindigkeit werden innerhalb dieser Zeitdauer vorzugsweise linear von dem alten Wert auf den neuen Wert umgestellt (durch die Steuereinrichtung).

Grundsätzlich wäre es auch möglich, dass die Kunststofffolie aus mehreren Lagen gebildet ist. Diese Lagen können aus demselben Material oder aus unterschiedlichen Materialien gebildet werden. Hierfür umfasst die Extruderanordnung mehrere Extruder, wobei jeder Extruder zur Ausgabe einer Kunststoffschmelze auf die Chill-Roll ausgebildet ist (hierzu zählt auch der Einsatz einer Düse), aus denen dann die einzelnen Lagen der Kunststofffolie gebildet werden. Sämtliche Extruder sind mit ihrem Ausgang direkt oder auch indirekt mit der gemeinsamen Düse, insbesondere mit der Breitschlitzdüse verbunden. Über das Bedienterminal kann eine Eingabe bezüglich entsprechender Sollwertvorgaben für die Dicken der jeweiligen Lagen erfasst werden. Die Steuereinrichtung ist dann dazu ausgebildet, die Kunststoff-Ausgabemengen für jeden der mehreren Extruder derart anzupassen, dass die Kunststoff-Ausgabemengen dieser mehreren Extruder zueinander im selben Verhältnis stehen wie die Sollwertvorgaben für die Dicken der jeweiligen Lagen der fertig gereckten Kunststofffolie. Dabei kann wiederum analysiert werden, ob die jeweiligen Kunststoff-Ausgabemengen für jeden der mehreren Extruder einstellbar sind, um den Zielwert oder den Einstellwert für die erste Produktionsgröße erreichen zu können. Ist dies nicht der Fall, kann eine Fehlermeldung ausgegeben und der Benutzer aufgefordert werden, weitere bzw. andere Sollwertvorgaben für die einzelnen Lagen einzugeben.

Das erfindungsgemäße Computerprogramm mit Programmcode-Mitteln erlaubt, dass das erfindungsgemäße Verfahren durchgeführt werden kann, wenn das Programm auf einem Computer oder einem digitalen Signalprozessor ausgeführt wird. Das Computerprogramm-Produkt mit insbesondere auf einem maschinelesbaren Träger gespeicherten Programmcode-Mitteln erlaubt, dass das erfindungsgemäße Verfahren durchgeführt werden kann, wenn das Programm auf einem Computer oder einem digitalen Signalprozessor ausgeführt wird.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figur 1:: eine Übersicht einen Teil einer Folienreckanlage zur Herstellung einer Kunststofffolie;
- Figur 2:: eine weitere Übersicht über die erfindungsgemäße Folienreckanlage;
- Figur 3:: eine Visualisierung, die die Einstellung eines Arbeitspunkts für die Folienreckanlage erläutert;
- Figuren 4A, 4B, 4C:: verschiedene Visualisierungen, die die Einstellung eines Arbeitspunkts für die Folienreckanlage unter Zugrundelegung verschiedener Produktionsgrößen näher beschreiben;
- Figur 5:: eine Visualisierung, die den Zusammenhang zwischen mehreren Schichten der Kunststofffolie und der Extruderanordnung beschreibt;
- Figuren 6A, 6B:: verschiedene Visualisierungen, die erläutern wie sich eine Produktionsgröße zusammensetzt; und
- Figuren 7A, 7B, 7C, 7D und 7E:: verschiedene Flussdiagramme, die das erfindungsgemäße Verfahren zum Einstellen eines Arbeitspunkts für die Folienreckanlage näher beschreiben.

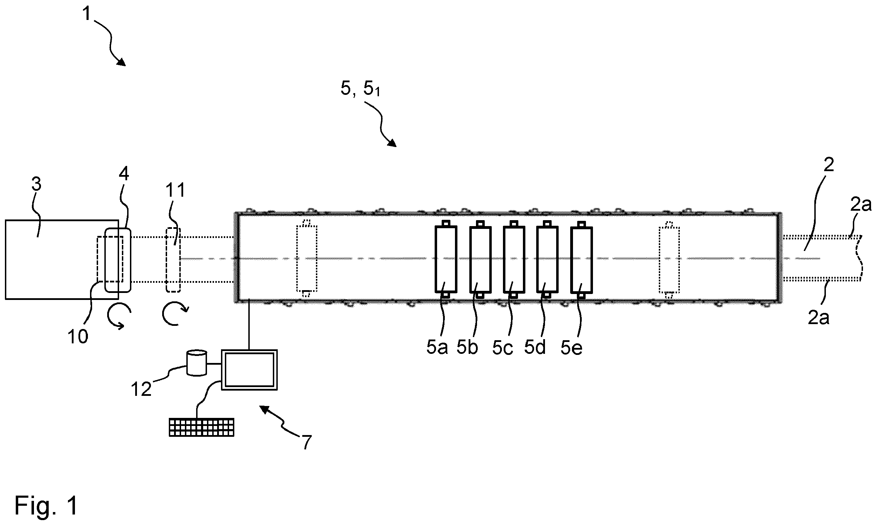

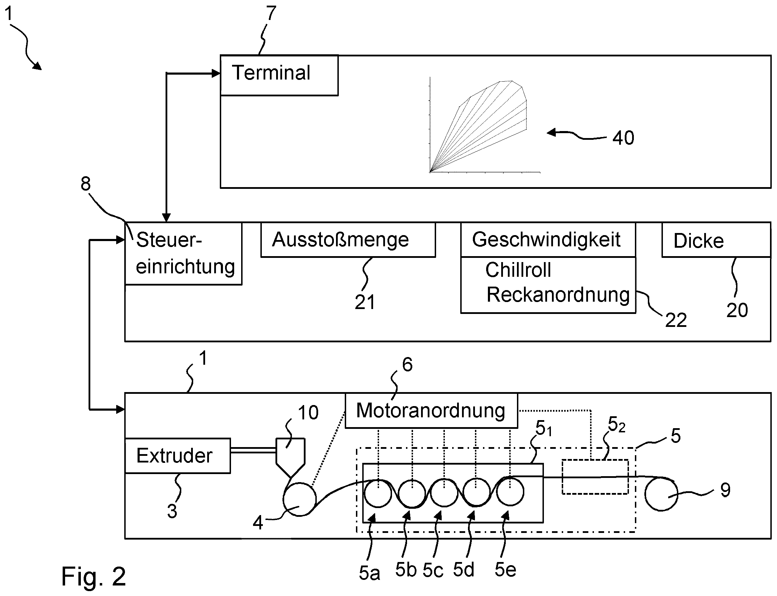

Die Figuren 1 und 2 erläutern den Aufbau der erfindungsgemäßen Folienreckanlage 1. Die Folienreckanlage 1 dient zur Herstellung einer Kunststofffolie 2, die eine oder mehrere Schichten umfassen kann. Die Folienreckanlage 1 weist hierzu eine Extruderanordnung 3, eine Düse 10, insbesondere in Form einer Breitschlitzdüse, eine Chill-Roll 4, eine Reckanordnung 5 mit zumindest einer Längsreckanlage 5₁, eine Motoranordnung 6, die zum Antreiben der Chill-Roll 4 und der Reckanordnung 5 dient, ein Bedienterminal 7, eine Speichereinrichtung 12 und eine Steuereinrichtung 8 auf, wobei die Steuereinrichtung 8 dazu ausgebildet ist, um die Motoranordnung 6, die Extruderanordnung 5 und das Bedienterminal 7 anzusteuern. Es ist klar, dass eine Speichereinrichtung 12 mehrere physikalisch getrennte Speicher umfassen kann. Wird im Rahmen dieser Beschreibung lediglich von der Speichereinrichtung 12 gesprochen, dann ist dies derart zu verstehen, dass es dennoch beliebig viele Speicher verteilt über die Folienreckanlage 1 geben kann. Die Längsreckanlage 5₁ ist dazu ausgebildet, um die Kunststofffolie 2 in Längsrichtung zu recken. Optional kann auch noch eine Querreckanlage 5₂ (siehe Figur 2) vorgesehen sein, um die Kunststofffolie 2 in Querrichtung zu recken. Die Längsreckanlage 5₁ der Reckanordnung 5 umfasst vorzugsweise mehrere Reckstufen 5a, 5b, 5c, 5d, 5e. In dem dargestellten Ausführungsbeispiel umfasst die Reckanordnung 5 fünf Reckstufen 5a, 5b, 5c, 5d und 5e. Diese Reckstufen 5a, 5b, 5c, 5d und 5e umfassen Walzen (siehe Figur 2). Alle Walzen werden vorzugsweise durch unterschiedliche Motoren der Motoranordnung 6 angetrieben. Die Geschwindigkeit, mit welcher die Kunststofffolie 2 durch die Längsreckanlage 5₁ der Reckanordnung 5 bewegt wird, wird durch die einzelnen Reckstufen 5a, 5b, 5c, 5d, 5e zum Ausgang der Längsreckanlage 5₁ hin erhöht. Diese Erhöhung der Geschwindigkeit kann linear und damit gleich verteilt über alle Reckstufen 5a, 5b, 5c, 5d, 5e erfolgen. Dies muss aber nicht der Fall sein und so kann die Erhöhung der Geschwindigkeit auch nicht linear und damit ungleich verteilt über alle Reckstufen 5a, 5b, 5c, 5d und 5e erfolgen. Es kann daher sein, dass die Geschwindigkeit der Kunststofffolie 2 von der ersten zu zweiten Reckstufe 5a, 5b stärker erhöht wird (in m/min) als von der vierten Reckstufe 5d zur fünften Reckstufe 5e. Dies wird insbesondere durch eine sich erhöhende Umdrehungsgeschwindigkeit der Walzen (von der ersten Reckstufe 5a hin zu der letzten Reckstufe 5e) erreicht, indem die einzelnen Motoren der Motoranordnung 6 unterschiedlich schnell drehen.

Die Extruderanordnung 3 dient zur Herstellung der Kunststoffschmelze und gibt diese Kunststoffschmelze über die Düse 10 (z.B. Breitschlitzdüse) auf die Chill-Roll 4 aus. Nach der Chill-Roll 4 und vor der Reckanordnung 5 können noch Umlenkrollen 11 angeordnet sein, um die Kunststofffolie 2 zu führen.

Das Bedienterminal 7 umfasst bevorzugt sowohl eine Eingabe- als auch eine Ausgabevorrichtung und eine Computereinheit mit Prozessor. Dargestellt sind hier Tastatur und Monitor. Das Bedienterminal 7 kann ergänzend oder alternativ auch einen Touchscreen umfassen. Das Bedienterminal 7 kann über bekannte Schnittstellen, wie z.B. eine Netzwerkschnittstelle oder andere Schnittstellen, mit der Steuereinrichtung 8 verbunden sein. Eine Speichereinrichtung 12 kann mit dem Bedienterminal 7 und/oder mit der Steuereinrichtung 8, die beispielsweise im Bedienterminal 7 integriert ist, verbunden sein.

Am Ausgang der Folienreckanlage 1 ist noch ein Wickler 9 vorgesehen, der zum Aufwickeln der fertig gereckten Kunststofffolie 2 dient.

In Figur 2 ist die Folienreckanlage 1 in unterschiedliche funktionelle Blöcke aufgeteilt. In einem ersten Block findet die Visualisierung von wichtigen Produktionsgrößen der Folienreckanlage 1 statt. Diese Visualisierung wird durch das Bedienterminal 7 ausgeführt. Das Bedienterminal 7 ist, wie bereits dargestellt, mit der Steuereinrichtung 8 verbunden. Die Steuereinrichtung 8 ist dazu ausgebildet, um die Extruderanordnung 3, die Motoranordnung 6 mit ihren Motoren und damit die Chill-Roll 4 und die Reckanordnung 5 anzusteuern. Weiterhin umfasst die Steuereinrichtung 8 Sensoren, die die Dicke der Kunststofffolie 2 in verschiedenen Stadien (z.B. innerhalb der Reckanordnung 5) oder am Ausgang der Reckanordnung 5 oder am Wickler 9 messen.

Ein weiterer Block umfasst die Hardwarekomponenten der Folienreckanlage 1. Hierzu gehört die Extruderanordnung 3, die mehrere Extruder 3a, 3b, 3c, 3d und 3e aufweisen kann. Die Anzahl hier ist beliebig. Der Ausgang dieser Extruderanordnung 3 ist mit der Düse 10, insbesondere in Form einer (Breit-)Schlitzdüse verbunden. Die Kunststoffschmelze, die aus der Düse 10 herausgepresst wird, wird auf die Chill-Roll 4 ausgegeben. Von der Chill-Roll 4 wird die Kunststofffolie 2 der Reckanordnung 5 zugeführt. Die fertig gereckte Kunststofffolie 2 wird an dem Wickler 9 aufgewickelt. Die Steuereinrichtung 8 steuert dabei diese Hardwarekomponenten an.

Die Funktionsfähigkeit der Folienreckanlage 1 wird durch verschiedene Produktionsgrößen 20, 21, 22 sichergestellt. Bei einer ersten Produktionsgröße 20 handelt es sich um eine Dicke der fertig gereckten Kunststofffolie 2. Diese erste Produktionsgröße 20 ist dabei in einem Bereich zwischen einer minimal zulässigen Dicke und einer maximal zulässigen Dicke einstellbar. Bei einer zweiten Produktionsgröße 21 handelt es sich um eine Kunststoff-Ausgabemenge der Extruderanordnung 3. Diese zweite Produktionsgröße 21 ist ebenfalls in einem Bereich zwischen einer minimal zulässigen Kunststoff-Ausgabemenge und einer maximal zulässigen Kunststoff-Ausgabemenge einstellbar. Bei einer dritten Produktionsgröße 22 handelt es sich um eine Anlagengeschwindigkeit der Folienreckanlage 1. Insbesondere wird darunter die Geschwindigkeit verstanden, mit welcher die fertig gereckte Kunststofffolie 2 am Wickler 9 aufgewickelt wird. Diese Anlagengeschwindigkeit ist wiederum zwischen einer minimal zulässigen Anlagengeschwindigkeit und einer maximal zulässigen Anlagengeschwindigkeit einstellbar. Alle drei Produktionsgrößen 20, 21, 22 sind miteinander, insbesondere über lineare Beziehungen, verknüpft. Dies bedeutet, dass bei Änderung einer Produktionsgröße 20, 21, 22 zumindest eine weitere oder beide weitere Produktionsgrößen 20, 21, 22 ebenfalls angepasst werden müssen. Bei einer Erhöhung der ersten Produktionsgröße 20 (Dicke der Kunststofffolie 2) muss die zweite Produktionsgröße 21 (Kunststoff-Ausgabemenge der Extruderanordnung 3) erhöht und/oder die dritte Produktionsgröße 22 (Anlagengeschwindigkeit der Folienreckanlage 1) erniedrigt werden.

Alle drei Produktionsgrößen 20, 21, 22 definieren zusammen einen Arbeitspunkt 30 der Folienreckanlage 1. Je nach Art der herzustellenden Kunststofffolie 2 kann dieser Arbeitspunkt 30 unterschiedlich innerhalb eines zulässigen Arbeitsbereichs 40 gewählt werden.

In dem erfindungsgemäßen Verfahren wird dabei sichergestellt, dass alle Produktionsgrößen 20, 21, 22, die zur Festlegung des Arbeitspunkts 30 dienen, in ihrem jeweiligen zulässigen Bereich angesiedelt sind. Bisherige Folienreckanlagen können durch fehlerhafte Eingaben in unzulässigen Arbeitsbereichen 40 betrieben werden.

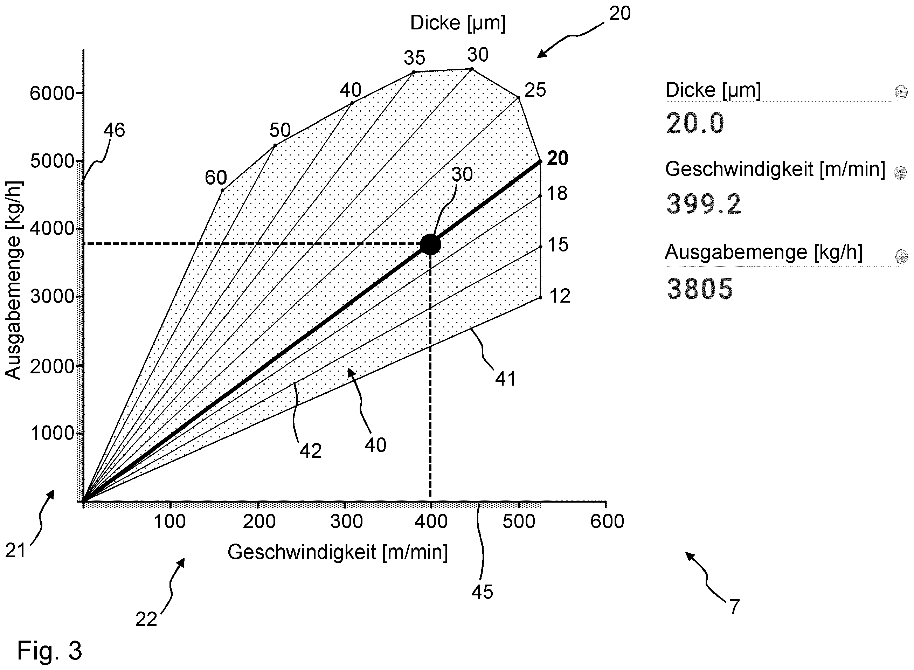

In Figur 3 ist die Visualisierung eines solchen zulässigen Arbeitsbereichs 40 beschrieben. Diese Visualisierung findet (z.B. durch die Steuereinrichtung 8) bevorzugt auf dem Bedienterminal 7 statt. Der zulässige Arbeitsbereich 40 wird auf dem Bedienterminal 7 in Form einer zweidimensionalen Darstellung abgebildet. Dabei wird die zweite Produktionsgröße 21 auf der vertikalen Achse (Koordinatenachse) abgebildet. Die dritte Produktionsgröße 22 wird auf der horizontalen Achse (Abszissenachse) abgebildet. Grundsätzlich könnte diese Abbildung auch vertauscht sein. Zusammen mit der ersten Produktionsgröße 20 wird der zulässige Arbeitsbereich 40 definiert. Die minimalen und maximalen Werte für die jeweiligen Produktionsgrößen 20, 21, 22 können beispielsweise der Speichereinrichtung 12 entnommen werden.

Dargestellt ist ebenfalls eine Umrandung, wobei sämtliche zulässigen Arbeitspunkte 30 innerhalb dieser Umrandung bzw. auf dieser Umrandung 41 liegen.

Weiterhin sind verschiedene Geraden 42 dargestellt, die innerhalb der Umrandung 41 verlaufen. Die Geraden 42 haben einen gemeinsamen Ursprung, von dem sie sich weg erstrecken. Auf jeder Geraden 42 liegen erste Produktionsgrößen 20, die denselben Wert aufweisen. Erste Produktionsgrößen 20, die auf unterschiedlichen Geraden 42 liegen, haben verschiedene Werte. Hervorgehoben ist in Figur 3 eine Gerade 42, welche den ersten Produktionswert 20 aufweist, der angibt, dass die fertig gereckte Kunststofffolie 2 eine Dicke von 20 µm umfasst. Der Arbeitspunkt 30 ist hier derart eingestellt, dass die zweite Produktionsgröße 21 eine Kunststoff-Ausgabemenge von 3805 kg/h umfasst. Die dritte Produktionsgröße 22 umfasst eine Anlagengeschwindigkeit von 399,2 m/min. Soll die erste Produktionsgröße 20 beibehalten werden und soll die dritte Produktionsgröße 22 reduziert werden, dann muss auch die zweite Produktionsgröße 21 reduziert werden, damit sich der Arbeitspunkt 30 weiterhin auf der hervorgehobenen Geraden 42 befindet.

Dargestellt sind weiterhin die maximalen Einstellwerte 45, 46 für die zweite Produktionsgröße 21 und die dritte Produktionsgröße 22. Diese maximalen Einstellwerte 45, 46 sind durch schraffierte Bereiche 45 an den Achsen angezeigt. Um die maximale Produktionsmenge zu erreichen, wobei die erste Produktionsgröße 20 nicht verändert werden soll, kann die zweite Produktionsgröße 21 auf 5000 kg/h und die dritte Produktionsgröße 22 auf 520 m/min gesteigert werden.

Ein Bediener der Folienreckanlage 1 kann anhand des visualisierten Arbeitspunkts 30 sehr genau sehen, wie hoch die Reserven zu den maximal möglichen Produktionsgrößen 20, 21, 22 noch sind. Insbesondere kann er die Reserve sehr genau abschätzen, die die Folienreckanlage 1 bietet, wenn die erste Produktionsgröße 20 (Foliendicke) konstant gehalten werden soll.

Um sicherzustellen, dass der Arbeitspunkt 30 jeweils innerhalb des zulässigen Arbeitsbereichs 40 liegt, sieht das erfindungsgemäße Verfahren zum Einstellen dieses Arbeitspunktes 30 vor, dass über die Steuereinrichtung 8 eine Eingabe des Bedienterminals 7 erfasst wird. Diese Eingabe umfasst einen Zielwert für die erste, zweite oder dritte Produktionsgröße 20, 21, 22. Im Anschluss daran legt die Steuereinrichtung 8 einen Einstellwert für die beiden anderen Produktionsgrößen 20, 21; 21, 22 oder 20, 22 fest. Die jeweiligen Einstellwerte werden derart gewählt, dass der vorgegebene Zielwert für die erste, zweite oder dritte Produktionsgröße 20, 21, 22 erreicht wird. Im Anschluss daran werden die Motorenanordnung 6 und die Extruderanordnung 5 derart durch die Steuereinrichtung 8 angesteuert, dass der Arbeitspunkt 30, welcher aus dem Zielwert und den beiden Einstellwerten besteht bzw. diese umfasst, erreicht wird.

Grundsätzlich wird auch analysiert, ob der Zielwert für die erste, zweite oder die dritte Produktionsgröße 20, 21, 22 innerhalb des zulässigen Bereichs für die jeweilige Produktionsgröße 20, 21, 22 liegt. Ist dies der Fall, dann wird der Zielwert entsprechend übernommen und die Einstellwerte für die beiden anderen Produktionsgrößen 20, 21, 22 durch die Steuereinrichtung 8 festgelegt. Ist dies nicht der Fall, dann ist die Steuereinrichtung 8 dazu ausgebildet, um das Bedienterminal 7 derart anzusteuern, dass dieses eine Fehlermeldung bzw. einen entsprechenden Hinweis anzeigt. Im Anschluss daran wird der Verfahrensschritt "Erfassen" widerholt und der Bediener erneut aufgefordert einen zulässigen Zielwert einzugeben.

Wie bereits erläutert, sind die Einstellwerte über lineare Beziehungen miteinander verknüpft. Wird ein Zielwert für die erste Produktionsgröße 20 vorgegeben, dann wird dieser dadurch erreicht, dass die Einstellwerte für die beiden anderen Produktionsgrößen 21, 22 verändert werden. Es wäre auch möglich, dass lediglich ein Einstellwert, bei einem vorgegebenen festen Zielwert für die erste Produktionsgröße 20, für eine der anderen Produktionsgrößen 21, 22 verändert wird. Der andere Einstellwert wäre gesperrt bzw. würde nicht geändert werden. Nichts anderes gilt auch, wenn für die zweite Produktionsgröße 21 oder für die dritte Produktionsgröße 22 ein Zielwert vorgegeben wird. In diesem Fall wird für genau eine oder für beide anderen Produktionsgrößen 20, 21, 22 der entsprechende Einstellwert geändert.

Wird ein Zielwert für die erste Produktionsgröße 20 vorgegeben, dann kann die erste Produktionsgröße 20 als konstant bzw. fixiert angesehen werden. In diesem Fall können die Einstellwerte für die beiden anderen Produktionsgröße 21 und 22 festgelegt (und gegenüber ihren vorherigen Werten verändert) werden. Dieses Festlegen kann automatisiert, z.B. anhand von Lookup-Tabellen erfolgen. Es könnte auch ein Einstellwert für die zweite oder dritte Produktionsgröße unverändert gelassen werden (fixiert bzw. gesperrt werden) oder manuell über das Bedienterminal 7 eingegeben werden. In diesem Fall wird der Einstellwert für die verbleibende Produktionsgröße 21 oder 22 derart gewählt, dass mit dem vorgegebenen Einstellwert der vorgegebene Zielwert für die erste Produktionsgröße 20 erreicht wird. Nichts anderes gilt auch dann, wenn der vorgegebene Zielwert die zweite oder dritte Produktionsgröße 21, 22 betrifft.

Wird ein Einstellwert für die erste Produktionsgröße 20 festgelegt (der Zielwert ist die zweite bzw. dritte Produktionsgröße 21, 22), dann sollte dieser mindestens 15%, 20%, 25%, 30%, 35%, 40% oder mehr als 45% von der maximal zulässigen Dicke der fertig gereckten Kunststofffolie 2 in Richtung der minimal zulässigen Dicke beabstandet sein. Gleichzeitig sollte dieser vorzugsweise auch mindestens 15%, 20%, 25%, 30%, 35%, 40% oder mehr als 45% von der minimal zulässigen Dicke der fertig gereckten Kunststofffolie 2 in Richtung der maximal zulässigen Dicke beabstandet sein. Dadurch wird sichergestellt, dass der Einstellwert von den Grenzwerten weit genug beabstandet ist, um die Anlage in einem sicheren Betrieb zu halten bzw. hochlaufen zu lassen.

Wird der Einstellwert für die zweite Produktionsgröße 21 festgelegt (der Zielwert ist die erste bzw. dritte Produktionsgröße 20, 22) dann sollte dieser derart gewählt werden, dass er mindestens 15%, 20%, 25%, 30%, 35%, 40% oder mehr als 45% von der maximal zulässigen Kunststoff-ausgabemenge der Extruderanordnung 3 in Richtung der minimal zulässigen Kunststoff-Ausgabemenge beabstandet ist. Gleichzeitig sollte er derart gewählt sein, dass er mindestens 15%, 20%, 25%, 30%, 35%, 40% oder mehr als 45% von der minimal zulässigen Kunststoff-Ausgabemenge der Extruderanordnung 3 in Richtung der maximal zulässigen Kunststoff-Ausgabemenge beabstandet ist.

Für den Fall, dass der Einstellwert für die dritte Produktionsgröße 22 festgelegt wird (die erste bzw. zweite Produktionsgröße 20, 21 wird als Zielwert vorgegeben), dann sollte dieser Einstellwert für die dritte Produktionsgröße 22 derart gewählt werden, dass er mindestens 15%, 20%, 25%, 30%, 35%, 40% oder mehr als 45% von der maximal zulässigen Anlagengeschwindigkeit der Folienreckanlagen in Richtung der minimal zulässigen Anlagengeschwindigkeit beabstandet ist. Gleichzeitig sollte er auch derart gewählt werden, dass der Einstellwert mindestens 15%, 20%, 25%, 30%, 35%, 40% oder mehr als 45% von der minimal zulässigen Anlagengeschwindigkeit der Folienreckanlage 1 in Richtung der maximal zulässigen Anlagengeschwindigkeit beabstandet ist. Dadurch wird erreicht, dass der Arbeitspunkt 30 nicht auf der Umrandung 41 angeordnet ist, sondern die Folienreckanlage 1 beabstandet von den möglichen Grenzwerten betrieben wird. Dadurch wird der Verschleiß geringer gehalten.

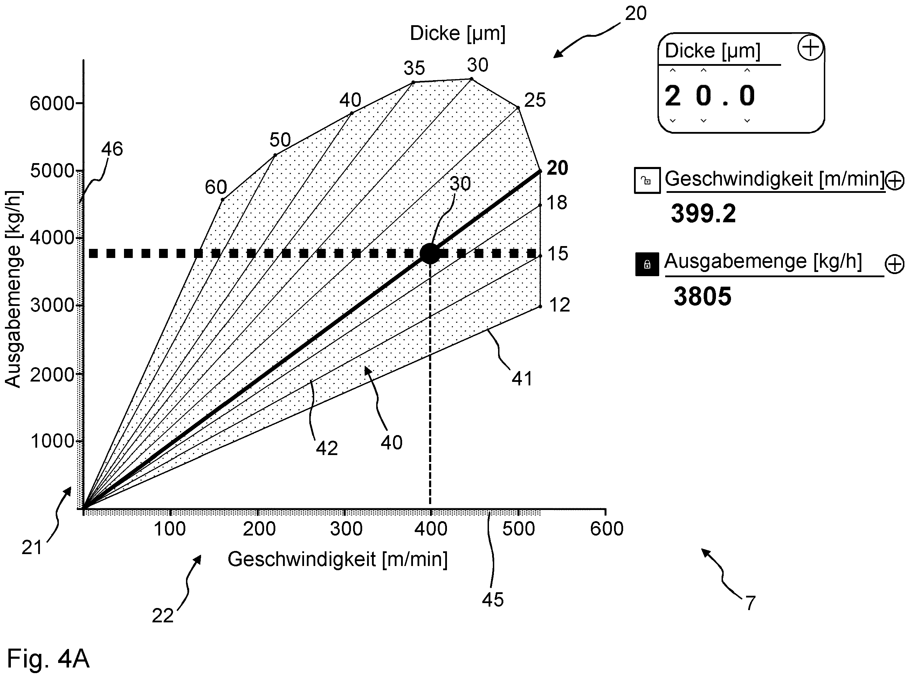

Bezugnehmend auf Figur 4A wird ein Zielwert für die erste Produktionsgröße 20 vorgegeben. Die Einstellwerte für die zweite und dritte Produktionsgröße 21, 22 sind derart festgelegt, dass noch eine Reserve hin zu den maximal möglichen Werten für die Einstellwerte vorhanden ist.

Erfindungsgemäß ist es weiterhin möglich, dass ein Einstellwert für Änderungen gesperrt wird. Dass ein Einstellwert gesperrt wird ist in Fig. 4A durch ein Sperrsymbol, in diesem Fall durch ein Schlosssymbol, dargestellt. Das Sperrsymbol kann beliebig gestaltet sein. Auch Schriftfarben alleine fallen darunter. In Figur 4A ist der Einstellwert für die zweite Produktionsgröße 21 (Änderung der Kunststoff-Ausgabemenge) gesperrt. Der Einstellwert für Änderungen der dritten Produktionsgröße 22 (Anlagengeschwindigkeit) ist entsperrt. Z.B. durch Klicken (z.B. mit der Maus oder einem Finger) auf das entsprechende Sperrsymbol (z.B. Schloss) kann dieses freigegeben werden bzw. es findet ein Umschalten statt und der andere Einstellwert ist gesperrt. Unter einem "Umschalten" ist ein "toggeln" zu verstehen, sodass der freigegebene (nicht gesperrte) Einstellwert gesperrt und der gesperrte Einstellwert freigegeben wird. Jedes Ändern des Sperrsymbols führt immer dazu, dass die Folienreckanlage 1 im erlaubten Arbeitsbereich 40 betrieben wird. Der Arbeitspunkt 30 befindet sich immer im erlaubten Arbeitsbereich 40.

Nachdem in Figur 4A als Zielwert für die erste Produktionsgröße eine Dicke von 20 µm durch das Bedienterminal 7 erfasst wurde, wird der Einstellwert für die freigegebene dritte Produktionsgröße 22 auf 399,2 m/min festgelegt. Die Motoranordnung 6 und die Extruderanordnung 3 werden durch die Steuereinrichtung 8 entsprechend angesteuert, dass der Arbeitspunkt 30 erreicht wird.

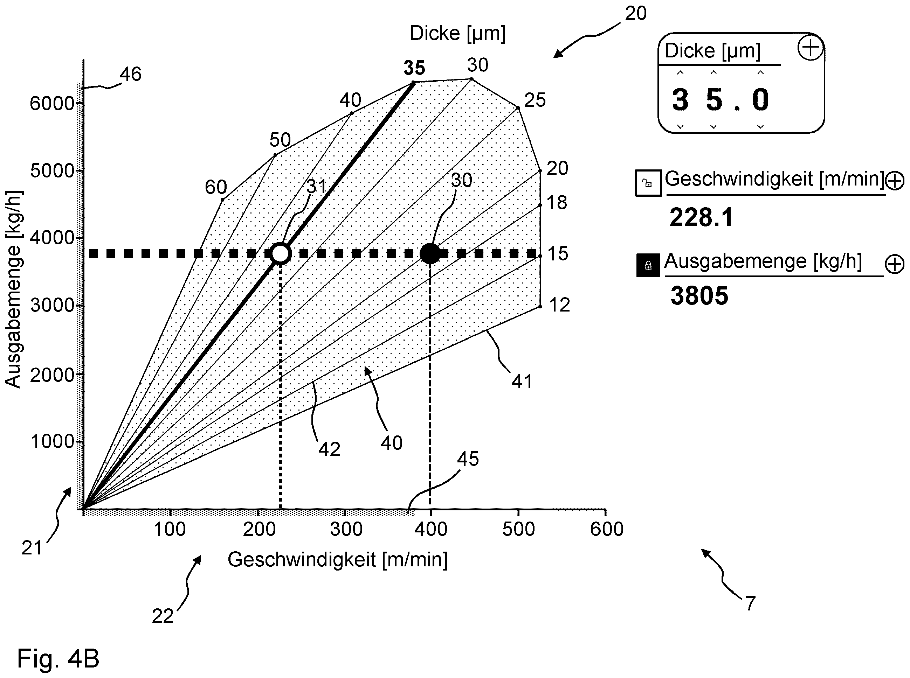

Bei Verändern der ersten Produktionsgröße 20 (Dicke der fertig verstreckten Kunststofffolie 2) bewegt sich der Arbeitspunkt 30 lediglich auf der dicken gepunkteten horizontalen Linie. Dieser Sachverhalt ist in Figur 4B dargestellt. Hier wurde der Zielwert der ersten Produktionsgröße 20 von 20 µm auf 35 µm geändert. Nachdem der Einstellwert für die zweite Produktionsgröße 21 gegenüber Veränderungen gesperrt wurde, kann der Arbeitspunkt 30 lediglich dadurch erreicht werden, dass die dritte Produktionsgröße 22 (Anlagengeschwindigkeit) verringert wird.

Die Steuereinrichtung 8 ist daher dazu ausgebildet, um das Bedienterminal 7 derart anzusteuern, dass dieses bei einem gesperrten Einstellwert für die zweite oder dritte Produktionsgröße 21, 22 mittels einer horizontalen bzw. vertikalen Linie visualisiert in welchem Bereich der Arbeitspunkt 30 verstellt werden kann. Ist der Einstellwert für die zweite Produktionsgröße 21 gesperrt, dann wird eine entsprechende horizontale Linie am Arbeitspunkt 30 eingeblendet. Ist der Einstellwert für die dritte Produktionsgröße 22 gesperrt, dann wird eine entsprechende vertikale Linie am Arbeitspunkt 30 eingeblendet. Für den Fall, dass die erste Produktionsgröße 20 gesperrt ist, wird die entsprechende Gerade 42 hervorgehoben.

Nachdem in Figur 4B ein neuer Zielwert für die erste Produktionsgröße 20 eingegeben wurde, wird ein geänderter Arbeitspunkt 31 festgelegt. Dieser geänderte Arbeitspunkt 31 wird mit einer anderen Farbe, Größe und/oder Form, verglichen zum vorherigen Arbeitspunkt 31, innerhalb der Umrandung 41 eingezeichnet. Für den geänderten Arbeitspunkt 31 werden wieder die maximal möglichen Einstellparameter 45, 46 für die zweite und dritte Produktionsgröße 21, 22 aktualisiert und insbesondere in Form eines schraffierten Bereichs an den Achsen dargestellt.

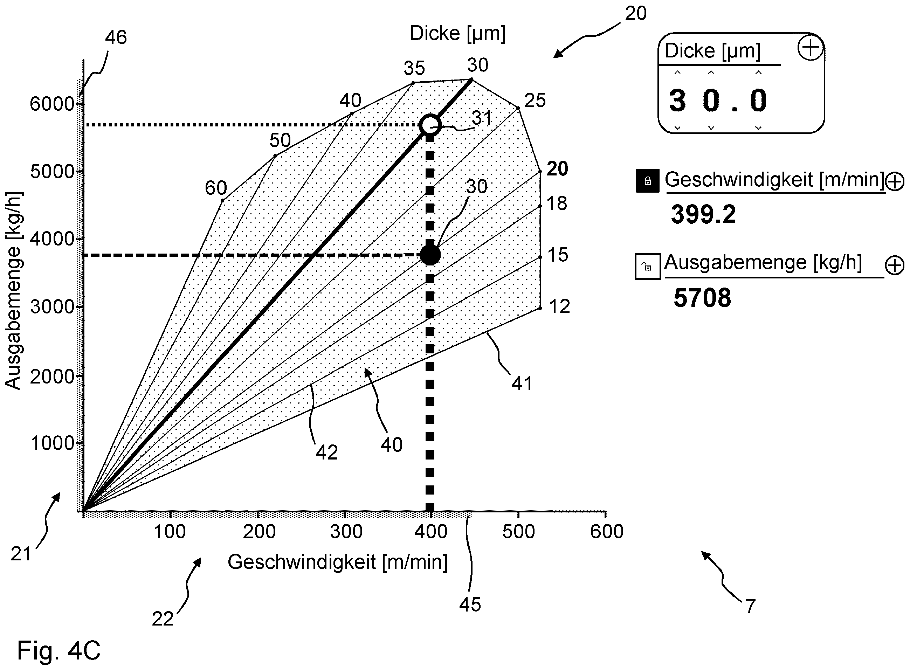

In Figur 4C wird die dritte Produktionsgröße 22 gegenüber Veränderungen gesperrt. Die zweite Produktionsgröße 21 kann dagegen verändert werden. Ausgehend von einem Zielwert von 20 µm für die erste Produktionsgröße 20 wird dieser Zielwert auf 30 µm erhöht. Dargestellt ist, dass sich der Arbeitspunkt 30 entlang der gestrichelten vertikalen Linie verschiebt. Der geänderte Arbeitspunkt 31 ist zusammen mit dem vorherigen Arbeitspunkt 30 eingezeichnet.

Die Extruderanordnung 3 kann im einfachsten Fall genau einen Extruder 3a umfassen. Der Ausgang des einen Extruders 3a ist ggf. über eine Schmelzepumpe mit der Düse 10 (insbesondere Breitschlitzdüse) verbunden. Vorzugsweise umfasst die Extruderanordnung 3 mehr als einen Extruder 3a. Insbesondere umfasst die Extruderanordnung 3 zwei, drei, vier, fünf, sechs, sieben, acht oder mehr als acht Extruder 3a, 3b, 3c, 3d, 3e. Diese sind gemeinsam mit der (genau) einen Düse 10 (insbesondere Breitschlitzdüse) verbunden.

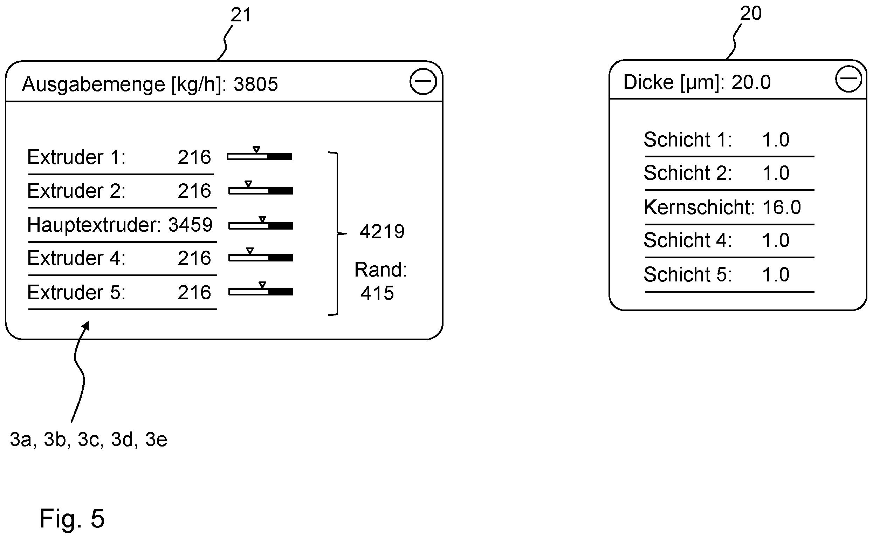

Grundsätzlich kann die Kunststofffolie 2 mehrere Lagen umfassen. Dieser Sachverhalt ist in Figur 5 dargestellt. Die Extruderanordnung 3 umfasst hierzu mehrere (z.B. zwei, drei, vier, fünf, sechs, sieben, acht oder mehr als acht) Extruder 3a, 3b, 3c, 3d, 3e, wobei jeder Extruder 3a, 3b, 3c, 3d, 3e zur Ausgabe einer Kunststoffschmelze ausgebildet ist, die zu den jeweiligen Lagen der Kunststofffolie 2 korrespondieren. Die Ausgänge aller Extruder 3a, 3b, 3c, 3d, 3e sind vorzugsweise gemeinsam, ggf. mittels einer (also über eine) Schmelzepumpe mit der Düse 10 verbunden. Über die Düse 10 wird die Kunststoffschmelze aller Extruder 3a, 3b, 3c, 3d, 3e auf die Chill-Roll 4 ausgegeben. Vorzugsweise gibt jeder der Extruder 3a, 3b, 3c, 3d, 3e eine Kunststoffschmelze aus, die aus demselben Material besteht. Zumindest zwei oder alle Extruder 3a, 3b, 3c, 3d, 3e können auch verschiedene Materialen ausgeben. Diese Materialen sollten allerdings derart beschaffen sein, dass sie aneinander haften. Über das Bedienterminal 7 können weitere Eingaben durch die Steuereinrichtung 8 erfasst werden. Diese Eingaben umfassen Sollwertvorgaben für die Dicken der jeweiligen Lagen der fertig gereckten Kunststofffolie 2 (rechtes Fenster). Dargestellt ist, dass die Lagen 1, 2, 4, 5 eine Dicke von jeweils 1 µm umfassen. Die Lage 3, bei welcher es sich auch um die Kernschicht handelt, umfasst eine Dicke von 16 µm. Erfindungsgemäß werden die Kunststoff-Ausgabemengen für jeden der mehreren Extruder 3a, 3b, 3c, 3d, 3e derart angepasst, dass die Kunststoff-Ausgabemengen zueinander im selben Verhältnis stehen wie die Sollwertvorgaben für die Dicken der jeweiligen Lagen der fertiggereckten Kunststofffolie 2.

In dem linken Ausgabefenster ist dargestellt, dass die Extruder 3a, 3b, 3d, 3e jeweils 216 kg Kunststoffschmelze pro Stunde erzeugen. Der Extruder 3c, der auch als Hauptextruder bezeichnet werden kann, erzeugt eine Kunststoff-Ausgabemenge von 3459 kg pro Stunde. Zusammen mit den anderen Extrudern 3a, 3b, 3d, 3e ergibt dies eine Ausgabemenge von 4219 kg pro Stunde. Dadurch, dass die Randbereiche 2a abgeschnitten werden (an denen wird die Kunststofffolie 2 bei Einsatz einer Querreckanlage 5₂ durch die Kluppen gehalten und entsprechend geführt), ergibt sich eine Nettokunststoff-Ausgabemenge von 3805 kg pro Stunde aus der letztlich die am Wickler 9 aufgewickelte Folie besteht. Der abgeschnittene Randbereich 2a (siehe Figur 1) wird entweder entsorgt oder erneut, je nach Folientyp, der Extruderanordnung 3 zugeführt. In diesem Fall wird dieser Randbereich 2a zerkleinert. In diesem Fall müsste der Extruderanordnung 3 weniger unbenutztes Material aus einem Vorratsbehälter zugeführt werden. Ebenfalls visualisiert wird die aktuelle Ausgabemenge des jeweiligen Extruders 3a, 3b, 3c, 3d, 3e bzgl. der maximal möglichen Kunststoff-Ausgabemenge. Hierfür gibt es vorzugsweise für jeden Extruder 3a, 3b, 3c, 3d, 3e einen Balken, der zumindest zwei Bereiche mit beispielsweise unterschiedlichen Farben umfasst. Ein erster Bereich stellt dabei den erlaubten Betriebsbereich dar (gekennzeichnet z.B. durch eine weiße Füllung) und ein zweiter Bereich stellt dabei den nicht erlaubten Betriebsbereich dar (gekennzeichnet z.B. durch eine schwarze Füllung). Ein entsprechender Indikator, beispielsweise in Form eines Markers (z.B. dreieckförmig) gibt an, in welchem Teil eines Bereichs sich der jeweilige Extruder 3a, 3b, 3c, 3d, 3e der Extruderanordnung 3 befindet. So kann die zweite Lage der Kunststofffolie 2 in einem größeren Umfang dicker gestaltet werden als die fünfte Lage der Kunststofffolie 2, weil der Extruder 3b größere Reserven hat als der Extruder 3e.

Grundsätzlich ist die Steuereinrichtung 8 dazu ausgebildet, um zu analysieren, ob die jeweilige Kunststoff-Ausgabemenge für jeden der mehreren Extruder 3a, 3b, 3c, 3d, 3e einstellbar sind, um den Zielwert bzw. den Einstellwert für die erste Produktionsgröße 20 überhaupt erreichen zu können. Die Steuereinrichtung 8 ist weiterhin dazu ausgebildet, um das Bedienterminal 7 derart anzusteuern, dass dieses eine Fehlermeldung oder einen Hinweis ausgibt, wenn zumindest eine Sollwertvorgabe bzw. mehrere Sollwertvorgaben, die die gewünschte Dicke für die unterschiedlichen Lagen betrifft, nicht erreichbar ist. Im Anschluss daran wird der Benutzer aufgefordert, geänderte Sollwertvorgaben für die Dicken der jeweiligen Lage der fertig gereckten Kunststofffolie 2 einzustellen.

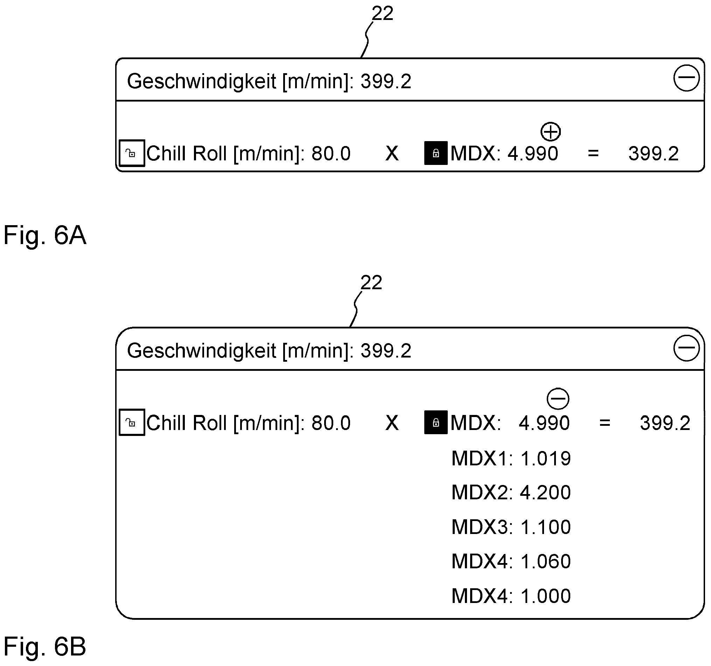

In den Figuren 6A und 6B wird erläutert, dass die dritte Produktionsgröße 22 eine erste Subgröße und eine zweite Subgröße umfasst. Die erste Subgröße der dritten Produktionsgröße 22 ist eine Geschwindigkeit (insbesondere in Meter pro Minute), mit welcher sich die Chill-Roll 4 dreht. Die zweite Subgröße der dritten Produktionsgröße 22 ist ein Längsreckverhältnis der Längsreckanlage 5₁ der Reckanordnung 5, wobei eine Multiplikation beider Subgrößen die dritte Produktionsgröße 22 ergibt. Gemäß Figur 6A beträgt die Geschwindigkeit der Chill-Roll 4 80 m/min. Bei einem Längsreckverhältnis von 4,990 ergibt sich daher eine Anlagengeschwindigkeit der Folienreckanlage am Wickler 9 von 399,2 m/min.

Sind Änderungen der dritten Produktionsgröße 22 gesperrt (s. Figur 4C), dann werden im Verfahrensschritt Festlegen sowohl die erste als auch die zweite Subgröße nicht verändert. Falls Änderungen der dritten Produktionsgröße 22 erlaubt sind (s. Figur 4B), dann kann entweder die erste Subgröße oder die zweite Subgröße oder beide Subgrößen verändert werden. Vorzugsweise ist das Längsreckverhältnis allerdings gesperrt (s. Figur 6A). Die dritte Produktionsgröße 22 wird daher lediglich durch Ändern der Geschwindigkeit der Chill-Roll 4 verändert.

Für den Fall, dass die Längsreckanlage 5₁ der Reckanordnung 5 der Folienreckanlage 1 mehrere Reckstufen 5a, 5b, 5c, 5d, 5e in Längsrichtung umfasst, ist es möglich, dass diese Reckverhältnisse individuell verändert werden. Die zweite Subgröße würde sich aus einer Multiplikation sämtlicher Reckverhältnisse ergeben. Für den Fall, dass, wie in Figur 6A dargestellt, eine Änderung der Reckverhältnisse gesperrt ist, wäre eine Änderung sämtlicher Reckstufen 5a, 5b, 5c, 5d, 5e gesperrt. Für den Fall, dass die Geschwindigkeit der Chill-Roll 4 gesperrt, allerdings eine Änderung der dritten Produktionsgröße 22 zulässig ist, kann festgelegt werden, welche Reckverhältnisse der jeweiligen Reckstufen 5a, 5b, 5c, 5d, 5e gesperrt bzw. freigegeben sind. So kann lediglich ein Ändern des Reckverhältnisses der zweiten Reckstufe 5b zulässig sein, so dass der Arbeitspunkt 30 bei einem geänderten Zielwert für die erste Produktionsgröße 20 und einer gesperrten zweiten Produktionsgröße 21 lediglich durch Ändern der Größe für das Reckverhältnis der zweiten Reckstufe 5b erreicht wird. Handelt es sich bei der Längsreckanlage 5₁ um eine Castfilmanlage, dann sind die Reckverhältnisse unveränderlich.

Es ist weiterhin möglich, dass durch das Bedienterminal 7 ein Eingabewert für eine Zeitdauer erfasst wird. Diese Zeitdauer gibt an, wie lange es dauert, bis die Folienreckanlage 1 von einem Arbeitspunkt 30 auf einen neuen Arbeitspunkt 31 umgestellt wird. Innerhalb dieser Zeitdauer findet ein Ändern der nicht gesperrten Produktionsgrößen 20, 21, 22 statt. Diese Änderung von dem alten auf den neuen Einstellwert erfolgt dabei bevorzugt linear.

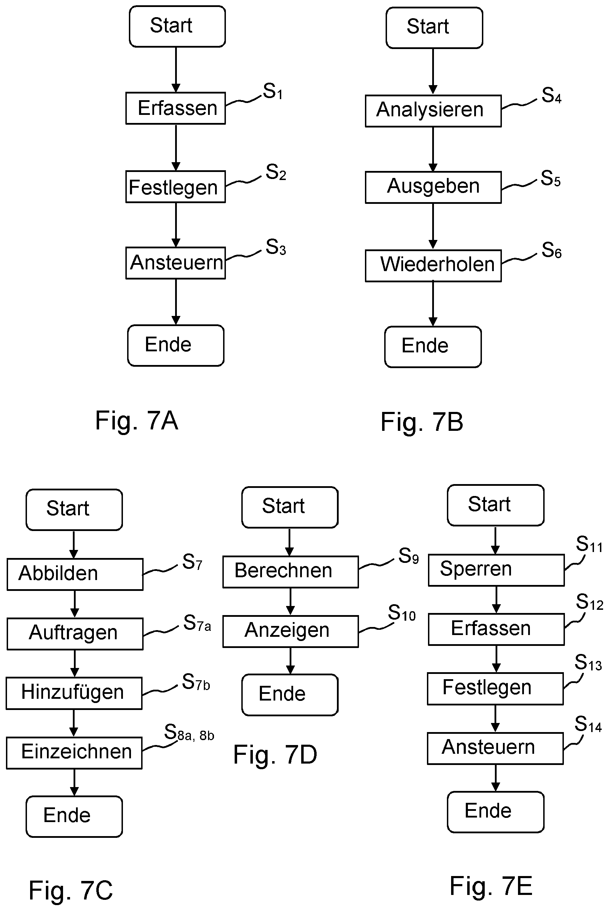

In den Figuren 7A, 7B, 7C, 7D und 7E sind Flussdiagramme dargestellt, die den Ablauf des erfindungsgemäßen Verfahrens zum Einstellen eines Arbeitspunktes 30 für eine Folienreckanlage 1 beschreiben. In einem Verfahrensschritt S₁ wird ein Zielwert für eine erste, zweite oder dritte Produktionsgröße 20, 21, 22 durch das Bedienterminal 7 erfasst. In Abhängigkeit dieses Zielwertes legt die Steuereinrichtung 8 Einstellwerte für die beiden anderen Produktionsgrößen 20, 21, 22 derart fest, dass der Zielwert erreicht wird. Dies erfolgt in dem Verfahrensschritt S₂.
Im Verfahrensschritt S₃ werden die Motoranordnung 6 und die Extruderanordnung 3 durch die Steueranordnung 8 derart angesteuert, dass der Arbeitspunkt 30 bestehend aus dem Zielwert und den beiden Einstellwerten erreicht wird.

In Figur 7B wird in dem Verfahrensschritt S₄ analysiert, ob sich der entsprechende Zielwert innerhalb des zulässigen Bereichs für die erste, zweite oder dritte Produktionsgröße 20, 21, 22 befindet. Weiterhin wird in dem Verfahrensschritt S₅ eine Fehlermeldung oder ein Hinweis auf dem Bedienterminal 7 ausgegeben, wenn der Zielwert außerhalb des jeweiligen Bereichs liegt. In diesem Fall wird der Verfahrensschritt S₆ ausgeführt, in welchem der Verfahrensschritt S₁ wiederholt wird.

In Figur 7C wird im Verfahrensschritt S₇ der zulässige Arbeitsbereich 40 auf dem Bedienterminal 7 in Form einer zweidimensionalen Darstellung abgebildet. Die entsprechenden Werte für diesen Arbeitsbereich 40 können aus einer nicht dargestellten Speichereinrichtung geladen werden. Innerhalb des Verfahrensschrittes S₇ wird der Verfahrensschritt S_{7A} ausgeführt. In diesem Verfahrensschritt wird die zweite Produktionsgröße 21 auf einer ersten Achse und die dritte Produktionsgröße 22 auf einer zweiten Achse (beide Achsen sind vorzugsweise um 90° zueinander versetzt) aufgetragen. Im Anschluss daran wird eine Umrandung 41 eingezeichnet, wobei sämtliche zulässigen Arbeitspunkte 30 innerhalb bzw. auf dieser Umrandung 41 liegen. Dies erfolgt in dem Verfahrensschritt S_{7B}.

Weiterhin kann auch der Verfahrensschritt S₈ₐ ausgeführt werden. In diesem Verfahrensschritt werden Geraden 42 in die Umrandung 40 eingezeichnet. Diese Geraden 42 haben einen gemeinsamen Ursprung von dem sie sich weg erstrecken. Auf jeder Geraden 42 liegen erste Produktionsgrößen 20, die den gleichen Wert aufweisen. Gleichzeitig kann in dem Verfahrensschritt S_{8b} auch der Arbeitspunkt 30 eingezeichnet werden. Die Reihenfolge dieser Schritte ist beliebig.

In Figur 7D wird in dem Verfahrensschritt S₉ die maximalen Einstellwerte 45, 46 für die zweite Produktionsgröße 21 und die dritte Produktionsgröße 22 berechnet. Dies erfolgt insbesondere dann, wenn ein Zielwert für die erste Produktionsgröße 20 vorgegeben wird.

Im Anschluss daran wird der Verfahrensschritt S₁₀ ausgeführt. In diesem Verfahrensschritt werden die maximalen Einstellwerte für die zweite und die dritte Produktionsgröße 21, 22 auf dem Bedienterminal 7 angezeigt.

In Figur 7E wird im Verfahrensschritt S₁₁ erläutert, dass ein Einstellwert für Änderungen gesperrt werden kann. Dieser Einstellwert kann die erste, zweite oder dritte Produktionsgröße 20, 21, 22 betreffen. Im Verfahrensschritt S₁₂ wird dann ein Zielwert für die freigegebene Produktionsgröße 20, 21, 22 erfasst.

Im Verfahrensschritt S₁₃ wird ein Einstellwert für die weitere freigegebene Produktionsgröße 20, 21, 22 festgelegt. Dieses Festlegen findet derart statt, dass der gewünschte Zielwert für eine Produktionsgröße 20, 21, 22 unter Zugrundelegung des gesperrten Einstellwerts für eine andere Produktionsgröße 20, 21; 20, 22; 21, 22 und damit der Arbeitspunkt 30 erreicht wird.

Im Verfahrensschritt S₁₄ findet dann die Ansteuerung der Motorenanordnung 6 und der Extruderanordnung 3 durch die Steuereinrichtung 8 derart statt, dass der Arbeitspunkt 30 bestehend aus dem Zielwert, dem gesperrten Einstellwert und dem festgelegten freigegebenen Einstellwert erreicht wird.

Weiterhin erfolgt bevorzugt ein Visualisieren des gesperrten Einstellwerts für die erste Produktionsgröße 20, die zweite Produktionsgröße 21 oder die dritte Produktionsgröße 22 als gesperrter Einstellwert (z.B. mit einem entsprechenden Symbol).

Das Festlegen der beiden Einstellwerte nachdem ein Zielwert vorgegeben wurde, kann unterschiedlich erfolgen. Es ist möglich, dass beide Einstellwerte aus einer Lookup-Tabelle in der Speichereinrichtung 12 in Abhängigkeit des Zielwerts ausgelesen werden. In dieser Lookup-Tabelle sind für jeden einstellbaren Zielwert einer Produktionsgröße 20, 21, 22 bevorzugte Einstellwerte für die anderen Produktionsgrößen 20, 21; 20, 22; 21, 22 enthalten. Alternativ kann eine weitere Eingabe durch das Bedienterminal 7 erfasst werden. In dieser weiteren Eingabe kann ein Benutzer eine Vorgabe für genau einen Einstellwert machen. Der andere Einstellwert wird dann automatisch durch die Steuereinrichtung 8 derart festgelegt (berechnet), dass der Zielwert unter Beibehaltung des einen Einstellwerts, welcher durch das Bedienterminal 7 erfasst wurde, erreicht wird.

Nachfolgend werden noch einige Vorteile des Verfahrens zum Einstellen eines Arbeitspunkts (30) für eine Folienreckanlage (1) zur Herstellung einer Kunststofffolie (2) gesondert beschrieben. Es wird gleichzeitig noch angegeben, mit welchen Ansprüchen die einzelnen Vorteile im Zusammenspiel besonders gute Ergebnisse liefern.

Ein Vorteil liegt vor, wenn das Verfahren insbesondere nachfolgende Verfahrensschritte aufweist, die z.B. mit dem Anspruch 8 interagieren können:
- Wiederholen der Verfahrensschritte Erfassen S₁ und Festlegen S₂, wobei der Zielwert und/oder zumindest ein Einstellwert geändert werden;
- Einzeichnen des geänderten Arbeitspunkts 31 zusätzlich zum vorherigen Arbeitspunkt 30.

Ein Vorteil liegt vor, wenn das Verfahren insbesondere noch folgenden Verfahrensschritt aufweist, der z.B. mit dem vorherigen Vorteil interagieren kann:
- der geänderte Arbeitspunkt 31 wird mit einer anderen Farbe, Größe und/oder Form verglichen zum vorherigen Arbeitspunkt 30 innerhalb der Umrandung 40 eingezeichnet.

Ein Vorteil liegt vor, wenn das Verfahren insbesondere nachfolgende Verfahrensschritte aufweist, die z.B. mit dem Anspruch 12 und dem Anspruch 10 oder 11 interagieren können:
- falls im Verfahrensschritt Sperren S₁₁ Änderungen der dritten Produktionsgröße 22 gesperrt sind werden im Verfahrensschritt Festlegen S₁₃ die erste und die zweite Subgröße nicht verändert; oder
- falls im Verfahrensschritt Sperren S₁₁ Änderungen der dritten Produktionsgröße 22 freigegeben sind werden im Verfahrensschritt Festlegen S₁₃:
   a) die erste Subgröße verändert, wobei die zweite Subgröße gesperrt ist; oder
   b) die zweite Subgröße verändert, wobei die erste Subgröße gesperrt ist; oder
   c) die erste Subgröße und die zweite Subgröße verändert.

Ein Vorteil liegt vor, wenn das Verfahren insbesondere nachfolgende Verfahrensschritte aufweist, die z.B. mit jedem Anspruch interagieren können:
- in der Speichereinrichtung 12 sind:
   a) die minimal zulässige Dicke der fertig gereckten Kunststofffolie 2 und die maximal zulässigen Dicke der fertig gereckten Kunststofffolie 2 hinterlegt; und
   b) die minimal zulässige Kunststoff-Ausgabemenge der Extruderanordnung 3 und die maximal zulässige Kunststoff-Ausgabemenge der Extruderanordnung 3 hinterlegt;
      und
   c) die minimal zulässige Anlagengeschwindigkeit der Folienreckanlage 1 und die maximal zulässige Anlagengeschwindigkeit der Folienreckanlage 1 hinterlegt.

Ein Vorteil liegt vor, wenn das Verfahren insbesondere nachfolgenden Verfahrensschritt aufweist, der z.B. mit jedem Anspruch interagieren kann:
- in der Speichereinrichtung 12 sind Arbeitspunkte 30 hinterlegt, um bestimmte Kunststofffolien 2 herstellen zu können.

Ein Vorteil liegt vor, wenn das Verfahren insbesondere nachfolgende Verfahrensschritte aufweist, die z.B. mit jedem Anspruch interagieren können:
- Erfassen einer Eingabe durch das Bedienterminal 7, wobei die Eingabe einen Wert für die Zeitdauer umfasst, die angibt, wie lange es dauert bis die Folienreckanlage 1 von einem Arbeitspunkt 30 auf einen neuen Arbeitspunkt 31 umgestellt wird;
- in dem Verfahrensschritt Ansteuern S₃ wird die Motorenanordnung 6 und die Extruderanordnung 3 durch die Steuereinrichtung 8 derart angesteuert, dass der Arbeitspunkt 30 bestehend aus dem Zielwert und zwei Einstellwerten innerhalb der Zeitdauer erreicht wird.

Ein Vorteil liegt vor, wenn das Verfahren insbesondere nachfolgende Verfahrensschritte aufweist, die z.B. mit dem Anspruch 14 interagieren können:
- Analysieren ob die jeweiligen Kunststoff-Ausgabemengen für jeden der mehreren Extruder 3a, 3b, 3c, 3d, 3e innerhalb einer minimalen und einer maximalen Kunststoff-Ausgabemenge des jeweiligen Extruders 3a, 3b, 3c, 3d, 3e liegen, um den Zielwert oder den Einstellwert für die erste Produktionsgröße 20 erreichen zu können;
- Ausgeben einer Fehlermeldung oder eines Hinweises auf dem Bedienterminal 7, wenn zumindest eine Sollwertvorgabe oder mehrere Sollwertvorgaben nicht erreichbar sind;
- Wiederholen des Verfahrensschritts Erfassen einer weiteren Eingabe.

Ein Vorteil liegt vor, wenn es noch ein Computerprogramm gibt, das mit jedem der Ansprüche interagieren kann, um das Verfahren gemäß einem dieser Ansprüche durchführen zu können, wenn das Programm auf einem Computer oder einem digitalen Signalprozessor ausgeführt wird.

Ein Vorteil liegt vor, wenn es noch ein Computerprogramm-Produkt, mit insbesondere auf einem maschinenlesbaren Träger gespeicherten Programmcode-Mitteln gibt, das mit jedem der Verfahrensansprüche interagieren kann, um alle Schritte gemäß einem der Verfahrensansprüche durchführen zu können, wenn das Programm auf einem Computer oder einem digitalen Signalprozessor ausgeführt wird.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

## Patentansprüche

1. Verfahren zum Einstellen eines Arbeitspunkts (30) für eine Folienreckanlage (1) zur Herstellung einer Kunststofffolie (2), wobei die Folienreckanlage (1) die folgenden Merkmale umfasst:
- eine Chill-Roll (4);
- eine Extruderanordnung (3) und eine Düse (10), wobei die Extruderanordnung (3) dazu ausgebildet ist, eine Kunststoffschmelze der Düse (10) zuzuführen und wobei die Kunststoffschmelze aus der Düse (10) auf die Chill-Roll (4) ausgebbar ist;
- eine Reckanordnung (5), die zumindest eine Längsreckanlage (5₁) aufweist, die zumindest eine Reckstufe (5a, 5b, 5c, 5d, 5e) in Längsrichtung umfasst und nach der Chill-Roll (4) angeordnet ist;
- eine Motoranordnung (6) zum Antreiben der Chill-Roll (4) und der Reckanordnung (5);
- ein Bedienterminal (7);
- eine Speichereinrichtung (12);
- eine Steuereinrichtung (8), die dazu ausgebildet ist, um die Motoranordnung (6), die Extruderanordnung (3) und das Bedienterminal (7) anzusteuern;
wobei der Arbeitspunkt (30) durch miteinander verknüpfte Produktionsgrößen (20, 21, 22) der Folienreckanlage (1) definiert ist, wobei es sich bei:
- einer ersten Produktionsgröße (20) um eine Dicke der fertig gereckten Kunststofffolie (2) handelt und wobei die erste Produktionsgröße (20) in einem Bereich zwischen einer minimal zulässigen Dicke der fertig gereckten Kunststofffolie (2) und einer maximal zulässigen Dicke der fertig gereckten Kunststofffolie (2) einstellbar ist;
und
- einer zweiten Produktionsgröße (21) um eine Kunststoff-Ausgabemenge der Extruderanordnung (3) handelt und wobei die zweite Produktionsgröße (21) in einem Bereich zwischen einer minimal zulässigen Kunststoff-Ausgabemenge der Extruderanordnung (3) und einer maximal zulässigen Kunststoff-Ausgabemenge der Extruderanordnung (3) einstellbar ist;
und
- einer dritten Produktionsgröße (22) um eine Anlagengeschwindigkeit der Folienreckanlage (1) handelt und wobei die dritte Produktionsgröße (22) in einem Bereich zwischen einer minimal zulässigen Anlagengeschwindigkeit der Folienreckanlage (1) und einer maximal zulässigen Anlagengeschwindigkeit der Folienreckanlage (1) einstellbar ist;
wobei das Verfahren die folgenden Verfahrensschritte aufweist:
- Erfassen (S₁) einer Eingabe durch das Bedienterminal (7), wobei die Eingabe:
a) einen Zielwert für die erste Produktionsgröße (20) beinhaltet; oder
b) einen Zielwert für die zweite Produktionsgröße (21) beinhaltet; oder
c) einen Zielwert für die dritte Produktionsgröße (22) beinhaltet
- Festlegen (S₂) :
a) eines Einstellwerts für die zweite Produktionsgröße (21) und die dritte Produktionsgröße (22), um den Zielwert für die erste Produktionsgröße (20) zu erreichen; oder
b) eines Einstellwerts für die erste Produktionsgröße (20) und die dritte Produktionsgröße (22), um den Zielwert für die zweite Produktionsgröße (21) zu erreichen; oder
c) eines Einstellwerts für die erste Produktionsgröße (20) und die zweite Produktionsgröße (21), um den Zielwert für die dritte Produktionsgröße (22) zu erreichen;
- Ansteuern (S₃) der Motorenanordnung (6) und der Extruderanordnung (3) durch die Steuereinrichtung (8) derart, dass der Arbeitspunkt (30) umfassend oder bestehend aus dem Zielwert und zwei Einstellwerten erreicht wird.

2. Verfahren nach Anspruch 1, **dadurch gekennzeichnet, dass** noch die folgenden Verfahrensschritte ausgeführt werden:
- Analysieren (S₄) :
a) ob der Zielwert für die erste Produktionsgröße (20) in einem Bereich zwischen der minimal zulässigen Dicke der fertig gereckten Kunststofffolie (2) und der maximal zulässigen Dicke der fertig gereckten Kunststofffolie (2) liegt; oder
b) ob der Zielwert für die zweite Produktionsgröße (21) in einem Bereich zwischen der minimal zulässigen Kunststoff-Ausgabemenge der Extruderanordnung (3) und der maximal zulässigen Kunststoff-Ausgabemenge der Extruderanordnung (3) liegt; oder
c) ob der Zielwert für die dritte Produktionsgröße (22) in einem Bereich zwischen der minimal zulässigen Anlagengeschwindigkeit der Folienreckanlage (1) und der maximal zulässigen Anlagengeschwindigkeit der Folienreckanlage (1) liegt;
- Ausgeben (S₅) einer Fehlermeldung oder eines Hinweises auf dem Bedienterminal (7), wenn der Zielwert außerhalb des jeweiligen Bereichs liegt;
- Wiederholen (S₆) des Verfahrensschritts Erfassen (S₁).

3. Verfahren nach Anspruch 1 oder 2, **gekennzeichnet durch** die folgenden Merkmale:
- die Einstellwerte sind über lineare Beziehungen miteinander verknüpft, wobei:
a) der Zielwert für die erste Produktionsgröße (20) dadurch erreicht wird, dass:
i) der Einstellwert für die zweite Produktionsgröße (21) unverändert bleibt und der Einstellwert für die dritte Produktionsgröße (22) geändert wird; oder
ii) der Einstellwert für die zweite Produktionsgröße (21) geändert wird und der Einstellwert für die dritte Produktionsgröße (22) unverändert bleibt; oder
iii) die Einstellwerte für die zweite und die dritte Produktionsgröße (21, 22) verändert werden;
oder
b) der Zielwert für die zweite Produktionsgröße (21) dadurch erreicht wird, dass:
i) der Einstellwert für die erste Produktionsgröße (20) unverändert bleibt und der Einstellwert für die dritte Produktionsgröße (22) geändert wird; oder
ii) der Einstellwert für die erste Produktionsgröße (20) geändert wird und der Einstellwert für die dritte Produktionsgröße (22) unverändert bleibt; oder
iii) die Einstellwerte für die erste und die dritte Produktionsgröße (20, 22) verändert werden;
oder
c) der Zielwert für die dritte Produktionsgröße (22) dadurch erreicht wird, dass:
i) der Einstellwert für die erste Produktionsgröße (20) unverändert bleibt und der Einstellwert für die zweite Produktionsgröße (21) geändert wird; oder
ii) der Einstellwert für die erste Produktionsgröße (20) geändert wird und der Einstellwert für die zweite Produktionsgröße (21) unverändert bleibt; oder
iii) die Einstellwerte für die erste und die zweite Produktionsgröße (20, 21) verändert werden.

4. Verfahren nach einem der vorherigen Ansprüche, **gekennzeichnet durch** die folgenden Merkmale:
- der Einstellwert für die erste Produktionsgröße (20) ist derart gewählt, dass er mindestens 15%, 20%, 25%, 30%, 35%, 40% oder mehr als 45% von der maximal zulässigen Dicke der fertig gereckten Kunststofffolie (2) in Richtung der minimal zulässigen Dicke der fertig gereckten Kunststofffolie (2) beabstandet ist; und/ oder
- der Einstellwert für die zweite Produktionsgröße (21) ist derart gewählt, dass er mindestens 15%, 20%, 25%, 30%, 35%, 40% oder mehr als 45% von der maximal zulässigen Kunststoff-Ausgabemenge der Extruderanordnung (3) in Richtung der minimal zulässigen Kunststoff-Ausgabemenge der Extruderanordnung (3) beabstandet ist; und/oder
- der Einstellwert für die dritte Produktionsgröße (22) ist derart gewählt, dass er mindestens 15%, 20%, 25%, 30%, 35%, 40% oder mehr als 45% von der maximal zulässigen Anlagengeschwindigkeit der Folienreckanlage (1) in Richtung der minimal zulässigen Anlagengeschwindigkeit der Folienreckanlage (1) beabstandet ist.

5. Verfahren nach einem der vorherigen Ansprüche, **gekennzeichnet durch** die folgenden Merkmale:
- der Einstellwert für die erste Produktionsgröße (20) ist derart gewählt, dass er mindestens 15%, 20%, 25%, 30%, 35%, 40% oder mehr als 45% von der minimal zulässigen Dicke der fertig gereckten Kunststofffolie (2) in Richtung der maximal zulässigen Dicke der fertig gereckten Kunststofffolie (2) beabstandet ist; und/ oder
- der Einstellwert für die zweite Produktionsgröße (21) ist derart gewählt, dass er mindestens 15%, 20%, 25%, 30%, 35%, 40% oder mehr als 45% von der minimal zulässigen Kunststoff-Ausgabemenge der Extruderanordnung (3) in Richtung der maximal zulässigen Kunststoff-Ausgabemenge der Extruderanordnung (3) beabstandet ist; und/oder
- der Einstellwert für die dritte Produktionsgröße (22) ist derart gewählt, dass er mindestens 15%, 20%, 25%, 30%, 35%, 40% oder mehr als 45% von der minimal zulässigen Anlagengeschwindigkeit der Folienreckanlage (1) in Richtung der maximal zulässigen Anlagengeschwindigkeit der Folienreckanlage (1) beabstandet ist.

6. Verfahren nach einem der vorherigen Ansprüche, **gekennzeichnet durch** die folgenden Verfahrensschritte:
- Abbilden (S₇) eines zulässigen Arbeitsbereichs (40) auf dem Bedienterminal (7) in Form einer zweidimensionalen Darstellung, wobei der Verfahrensschritt Abbilden (S₇) die folgenden weiteren Verfahrensschritte umfasst:
a) Auftragen (S₇ₐ) der zweiten Produktionsgröße (21) auf einer ersten Achse und Auftragen der dritten Produktionsgröße (22) auf einer zweiten Achse;
b) Hinzufügen (S_{7b}) einer Umrandung (41), wobei die zulässigen Arbeitspunkte (30) innerhalb der Umrandung (41) und/oder auf der Umrandung (41) liegen.

7. Verfahren nach Anspruch 6, **gekennzeichnet durch** den folgenden Verfahrensschritt:
- Einzeichnen (S₈ₐ) von Geraden (42) in die Umrandung (41), wobei die Geraden (42) einen gemeinsamen Ursprung haben von dem sie sich weg erstrecken und wobei auf jeder Geraden (42) erste Produktionsgrößen (20) liegen, die denselben Wert aufweisen und wobei erste Produktionsgrößen (20), die auf unterschiedlichen Geraden (42) liegen, verschiedene Werte haben.

8. Verfahren nach Anspruch 6 oder 7, **gekennzeichnet durch** den folgenden Verfahrensschritt:
- Einzeichnen (S_{8b}) des Arbeitspunkts (30) innerhalb der Umrandung (40).

9. Verfahren nach einem der vorherigen Ansprüche, **gekennzeichnet durch** die folgenden Verfahrensschritte:
- Berechnen (S₉) der maximalen Einstellwerte (45, 46) für die zweite Produktionsgröße (21) und die dritte Produktionsgröße (22), falls der Zielwert die erste Produktionsgröße (20) betrifft;
- Anzeigen (S₁₀) der maximalen Einstellwerte für die zweite Produktionsgröße (21) und die dritte Produktionsgröße (22).

10. Verfahren nach einem der vorherigen Ansprüche, **gekennzeichnet durch** die folgenden Verfahrensschritte:
- Sperren (S₁₁) eines Einstellwerts für Änderungen für die erste Produktionsgröße (20), die zweite Produktionsgröße (21) oder die dritte Produktionsgröße (22);
- Erfassen (S₁₂) einer Eingabe durch das Bedienterminal, (7) wobei die Eingabe einen Zielwert für eine freigegebene Produktionsgröße (20, 21, 22) beinhaltet;
- Festlegen (S₁₃) eines Einstellwerts für die weitere freigegebene Produktionsgröße (20, 21, 22);
- Ansteuern der Motorenanordnung (6) und der Extruderanordnung (3) durch die Steuereinrichtung (8) derart, dass der Arbeitspunkt (30) bestehend aus dem Zielwert, dem gesperrten Einstellwert und dem festgelegten Einstellwert erreicht wird.

11. Verfahren nach einem der vorherigen Ansprüche, **dadurch gekennzeichnet, dass** der Verfahrensschritt Festlegen (S₂) die folgenden Merkmale umfasst:
- Auslesen von beiden Einstellwerten aus einer Lookup-Tabelle in der Speichereinrichtung (12) in Abhängigkeit des Zielwerts; oder
- Erfassen einer weiteren Eingabe durch das Bedienterminal (7) für einen der beiden Einstellwerte und automatisches Festlegen des anderen Einstellwerts durch die Steuereinrichtung (8) derart, dass der Zielwert unter Beibehaltung des einen erfassten Einstellwerts erreicht wird.

12. Verfahren nach einem der vorherigen Ansprüche, **gekennzeichnet durch** das folgende Merkmal:
- die dritte Produktionsgröße (22) umfasst eine erste Subgröße und eine zweite Subgröße;
- die erste Subgröße der dritten Produktionsgröße (22) ist eine Geschwindigkeit, mit welcher sich die Chill-Roll (4) dreht, und die zweite Subgröße der dritten Produktionsgröße (22) ist ein Längsreckverhältnis, wobei eine Multiplikation beider Subgrößen die dritte Produktionsgröße (22) ergibt.
d)

13. Verfahren nach Anspruch 12, **gekennzeichnet durch** die folgenden Merkmale:
- die zweite Subgröße umfasst die Reckverhältnisse der mehreren Reckstufen (5a, 5b, 5c, 5d, 5e), wobei die Reckverhältnisse miteinander multipliziert die zweite Subgröße ergeben;
- im Verfahrensschritt Sperren (S₁₁) kann eine Veränderung des Reckverhältnisses einer oder aller Reckstufen (5a, 5b, 5c, 5d, 5e) gesperrt werden, sodass im Verfahrensschritt Festlegen (S₁₃) für den Einstellwert der dritten Produktionsgröße (22) kein Reckverhältnis oder nur das Reckverhältnis der nicht gesperrten Reckstufe (5a, 5b, 5c, 5d, 5e) änderbar ist.

14. Verfahren nach einem der vorherigen Ansprüche, **gekennzeichnet durch** die folgenden Merkmale:
- die Kunststofffolie (2) umfasst mehrere Lagen;
- die Extruderanordnung (3) umfasst mehrere Extruder, (3a, 3b, 3c, 3d, 3e) wobei jeder Extruder (3a, 3b, 3c, 3d, 3e) zur Ausgabe einer Kunststoffschmelze an die gemeinsame Düse (10) ausgebildet ist, wobei die Kunststoffschmelzen der einzelnen Extruder (3a, 3b, 3c, 3d, 3e) die einzelnen Lagen der Kunststofffolie (2) bilden;
und wobei das Verfahren die folgenden Verfahrensschritte aufweist:
- Erfassen einer weiteren Eingabe durch das Bedienterminal (7), wobei die Eingabe Sollwertvorgaben für die Dicken der jeweiligen Lagen der fertig gereckten Kunststofffolie (2) umfasst;
- Anpassen der Kunststoff-Ausgabemengen für jeden der mehreren Extruder (3a, 3b, 3c, 3d, 3e), sodass die Kunststoff-Ausgabemengen der mehreren Extruder (3a, 3b, 3c, 3d, 3e) zueinander im selben Verhältnis stehen wie die Sollwertvorgaben für die Dicken der jeweiligen Lagen der fertig gereckten Kunststofffolie (2).

15. Folienreckanlage (1) zur Herstellung einer Kunststofffolie (2), wobei die Folienreckanlage (2) die folgenden Merkmale umfasst:
- eine Chill-Roll (4);
- eine Extruderanordnung (3) und eine Düse (10), wobei die Extruderanordnung (3) dazu konfiguriert ist, eine Kunststoffschmelze der Düse (10) zuzuführen und wobei die Kunststoffschmelze aus der Düse (10) auf die Chill-Roll (4) ausgebbar ist;
- eine Reckanordnung (5) die zumindest eine Längsreckanlage (5₁) aufweist, die zumindest eine Reckstufe (5a, 5b, 5c, 5d, 5e) in Längsrichtung umfasst und nach der Chill-Roll (4) angeordnet ist;
- eine Motoranordnung (6) zum Antreiben der Chill-Roll (4) und der Reckanordnung (5);
- ein Bedienterminal (7);
- eine Speichereinrichtung (12);
- eine Steuereinrichtung (8), die dazu konfiguriert ist, um die Motoranordnung (6), die Extruderanordnung (3) und das Bedienterminal (7) anzusteuern;
wobei die Steuereinrichtung (8) dazu konfiguriert ist, um einen Arbeitspunkt (30) der Folienreckanlage (1) einzustellen, wobei der Arbeitspunkt (30) durch miteinander verknüpfte Produktionsgrößen (20, 21, 22) der Folienreckanlage (1) definiert ist, wobei es sich bei:
- einer ersten Produktionsgröße (20) um eine Dicke der fertig gereckten Kunststofffolie (20) handelt und wobei die erste Produktionsgröße (20) in einem Bereich zwischen einer minimal zulässigen Dicke der fertig gereckten Kunststofffolie (2) und einer maximal zulässigen Dicke der fertig gereckten Kunststofffolie (2) einstellbar ist;
und
- einer zweiten Produktionsgröße (21) um eine Kunststoff-Ausgabemenge der Extruderanordnung (3) handelt und wobei die zweite Produktionsgröße (21) in einem Bereich zwischen einer minimal zulässigen Kunststoff-Ausgabemenge der Extruderanordnung (3) und einer maximal zulässigen Kunststoff-Ausgabemenge der Extruderanordnung (3) einstellbar ist;
und
- einer dritten Produktionsgröße (22) um eine Anlagengeschwindigkeit der Folienreckanlage (1) handelt und wobei die dritte Produktionsgröße (22) in einem Bereich zwischen einer minimal zulässigen Anlagengeschwindigkeit der Folienreckanlage (1) und einer maximal zulässigen Anlagengeschwindigkeit der Folienreckanlage (1) einstellbar ist;
wobei die Steuereinrichtung (8) weiterhin dazu konfiguriert ist, um eine Eingabe auf dem Bedienterminal zu erfassen, wobei die Eingabe:
a) einen Zielwert für die erste Produktionsgröße (20) beinhaltet; oder
b) einen Zielwert für die zweite Produktionsgröße (21) beinhaltet; oder
c) einen Zielwert für die dritte Produktionsgröße (22) beinhaltet;
und wobei die Steuereinrichtung (8) weiterhin dazu konfiguriert ist um
a) einen Einstellwert für die zweite Produktionsgröße (21) und die dritte Produktionsgröße (22) festzulegen, um den Zielwert für die erste Produktionsgröße (20) zu erreichen; oder
b) eine Einstellwert für die erste Produktionsgröße (20) und die dritte Produktionsgröße (22) festzulegen, um den Zielwert für die zweite Produktionsgröße (21) zu erreichen; oder
c) einen Einstellwert für die erste Produktionsgröße (20) und die zweite Produktionsgröße (21) festzulegen, um den Zielwert für die dritte Produktionsgröße (22) zu erreichen;
und wobei die Steuereinrichtung (8) weiterhin dazu konfiguriert ist um die Motorenanordnung (6) und die Extruderanordnung (6) derart anzusteuern, dass der Arbeitspunkt (30) bestehend aus dem Zielwert und zwei Einstellwerten erreichbar ist.

## Claims

1. Method for setting an operating point (30) for a film stretching machine (1) for producing a plastics film (2), wherein the film stretching machine (1) comprises the following features:
- a chill roll (4);
- an extruder arrangement (3) and a die (10), wherein the extruder arrangement (3) is configured to supply a plastics melt to the die (10) and wherein the plastics melt can be discharged from the die (10) onto the chill roll (4) ;
- a stretching arrangement (5) which has at least one longitudinal stretching system (5₁) which comprises at least one stretching stage (5a, 5b, 5c, 5d, 5e) in the longitudinal direction and is arranged after the chill roll (4);
- a motor arrangement (6) for driving the chill roll (4) and the stretching arrangement (5);
- an operating terminal (7);
- a memory device (12);
- a control device (8) which is configured to control the motor arrangement (6), the extruder arrangement (3) and the operating terminal (7);
wherein the operating point (30) is defined by linked production variables (20, 21, 22) of the film stretching machine (1), wherein:
- a first production variable (20) is a thickness of the fully stretched plastics film (2), and wherein the first production variable (20) is adjustable in a range between a minimum permissible thickness of the fully stretched plastics film (2) and a maximum permissible thickness of the fully stretched plastics film (2); and
- a second production variable (21) is a plastics material output quantity of the extruder arrangement (3), and wherein the second production variable (21) is adjustable in a range between a minimum permissible plastics material output quantity of the extruder arrangement (3) and a maximum permissible plastics material output quantity of the extruder arrangement (3);
and
- a third production variable (22) is a line speed of the film stretching machine (1), and wherein the third production variable (22) is adjustable in a range between a minimum permissible line speed of the film stretching machine (1) and a maximum permissible line speed of the film stretching machine (1);
wherein the method comprises the following method steps:
- acquiring (S₁) an input by the operating terminal (7), wherein the input contains:
a) a target value for the first production variable (20); or
b) a target value for the second production variable (21); or
c) a target value for the third production variable (22) ;
- specifying (S₂):
a) a setting value for the second production variable (21) and the third production variable (22) in order to achieve the target value for the first production variable (20); or
b) a setting value for the first production variable (20) and the third production variable (22) in order to achieve the target value for the second production variable (21); or
c) a setting value for the first production variable (20) and the second production variable (21) in order to achieve the target value for the third production variable (22);
- controlling (S₃) the motor arrangement (6) and the extruder arrangement (3) by the control device (8) in such a way that the operating point (30) consisting of or comprising the target value and two setting values is reached.

2. Method according to claim 1, **characterised in that** the following method steps are also carried out:
- analysing (S₄):
a) whether the target value for the first production variable (20) lies in a range between the minimum permissible thickness of the fully stretched plastics film (2) and the maximum permissible thickness of the fully stretched plastics film (2); or
b) whether the target value for the second production variable (21) lies in a range between the minimum permissible plastics material output quantity of the extruder arrangement (3) and the maximum permissible plastics material output quantity of the extruder arrangement (3); or
c) whether the target value for the third production variable (22) lies in a range between the minimum permissible line speed of the film stretching machine (1) and the maximum permissible line speed of the film stretching machine (1);
- outputting (S₅) an error message or an indication on the operating terminal (7) if the target value is outside the respective range;
- repeating (S₆) the method step acquiring (S₁) .

3. Method according to either claim 1 or 2, **characterised by** the following features:
- the setting values are interlinked via linear relationships, wherein:
a) the target value for the first production variable (20) is achieved in that:
i) the setting value for the second production variable (21) remains unchanged and the setting value for the third production variable (22) is changed; or
ii) the setting value for the second production variable (21) is changed and the setting value for the third production variable (22) remains unchanged; or
iii) the setting values for the second and the third production variable (21, 22) are changed;
or
b) the target value for the second production (21)variableis achieved in that:
i) the setting value for the first production variable (20) remains unchanged and the setting value for the third production variable (22) is changed; or
ii) the setting value for the first production variable (20) is changed and the setting value for the third production variable (22) remains unchanged; or
iii) the setting values for the first and the third production variable (20, 22) are changed;
or
c) the target value for the third production variable (22) is achieved in that:
i) the setting value for the first production variable (20) remains unchanged and the setting value for the second production variable (21) is changed; or
ii) the setting value for the first production variable (20) is changed and the setting value for the second production variable (21) remains unchanged; or
iii) the setting values for the first and the second production variable (20, 21) are changed.

4. Method according to any of the preceding claims, **characterised by** the following features:
- the setting value for the first production variable (20) is selected such that it is spaced at least 15%, 20%, 25%, 30%, 35%, 40% or more than 45% from the maximum permissible thickness of the fully stretched plastics film (2) in the direction of the minimum permissible thickness of the fully stretched plastics film (2); and/or
- the setting value for the second production variable (21) is selected such that it is spaced at least 15%, 20%, 25%, 30%, 35%, 40% or more than 45% from the maximum permissible plastics material output quantity of the extruder arrangement (3) in the direction of the minimum permissible plastics material output quantity of the extruder arrangement (3); and/or
- the setting value for the third production variable (22) is selected such that it is spaced at least 15%, 20%, 25%, 30%, 35%, 40% or more than 45% from the maximum permissible line speed of the film stretching machine (1) in the direction the minimum permissible line speed of the film stretching machine (1).

5. Method according to any of the preceding claims, **characterised by** the following features:
- the setting value for the first production variable (20) is selected such that it is spaced at least 15%, 20%, 25%, 30%, 35%, 40% or more than 45% from the minimum permissible thickness of the fully stretched plastics film (2) in the direction of the maximum permissible thickness of the fully stretched plastics film (2); and/or
- the setting value for the second production variable (21) is selected such that it spaced at least 15%, 20%, 25%, 30%, 35%, 40% or more than 45% from the minimum permissible plastics material output quantity of the extruder arrangement (3) in the direction of the maximum permissible plastics material output quantity of the extruder arrangement (3); and/or
- the setting value for the third production variable (22) is selected such that it is spaced at least 15%, 20%, 25%, 30%, 35%, 40% or more than 45% from the minimum permissible line speed of the film stretching machine (1) in the direction the maximum permissible line speed of the film stretching machine (1).

6. Method according to any of the preceding claims, **characterised by** the following method steps:
- illustrating (S₇) a permissible operating range (40) on the operating terminal (7) in the form of a two-dimensional representation, wherein the method step illustrating (S₇) comprises the following further method steps:
a) plotting (S₇ₐ) the second production variable (21) on a first axis and plotting the third production variable (22) on a second axis;
b) adding (S_{7b}) a border (41), wherein the permissible operating points (30) lie within the border (41) and/or on the border (41).

7. Method according to claim 6, **characterised by** the following method step:
- drawing (S₈ₐ) straight lines (42) into the border (41), wherein the straight lines (42) have a common origin from which they extend away and wherein first production variables (20) lie on each straight line (42) and have the same value, and wherein first production variables (20) which lie on different straight lines (42) have different values.

8. Method according to either claim 6 or 7, **characterised by** the following method step:
- drawing in (S_{8b}) the operating point (30) within the border (40).

9. Method according to any of the preceding claims, **characterised by** the following method steps:
- calculating (S₉) the maximum setting values (45, 46) for the second production variable (21) and the third production variable (22) if the target value relates to the first production variable (20);
- displaying (S₁₀) the maximum setting values for the second production variable (21) and the third production variable (22).

10. Method according to any of the preceding claims, **characterised by** the following method steps:
- blocking (S₁₁) a setting value for changes for the first production variable (20), the second production variable (21) or the third production variable (22);
- acquiring (S₁₂) an input by the operating terminal (7), wherein the input contains a target value for a released production variable (20, 21, 22);
- specifying (S₁₃) a setting value for the further released production variable (20, 21, 22);
- controlling the motor arrangement (6) and the extruder arrangement (3) by the control device (8) in such a way that the operating point (30) consisting of the target value, the blocked setting value and the specified setting value, is reached.

11. Method according to any of the preceding claims, **characterised in that** the method step Specifying (S₂) comprises the following features:
- reading out both setting values from a lookup table in the memory device (12) as a function of the target value; or
- acquiring a further input by the operating terminal (7) for one of the two setting values and automatic specification of the other setting value by the control device (8) in such a way that the target value is reached while maintaining the one acquired setting value.

12. Method according to any of the preceding claims, **characterised by** the following feature:
- the third production variable (22) comprises a first sub-variable and a second sub-variable;
- the first sub-variable of the third production variable (22) is a speed at which the chill roll (4) rotates, and the second sub-variable of the third production variable (22) is a longitudinal stretching ratio, wherein a multiplication of both sub-variables results in the third production variable (22).

13. Method according to claim 12, **characterised by** the following features:
- the second sub-variable comprises the stretching ratios of the plurality of stretching stages (5a, 5b, 5c, 5d, 5e), wherein the stretching ratios multiplied together yield the second sub-variable;
- in the Blocking method step (S₁₁), a change in the stretching ratio of one or all of the stretching stages (5a, 5b, 5c, 5d, 5e) can be blocked, so that in the Specifying method step (S₁₃) for the setting value of the third production variable (22) no stretching ratio or only the stretching ratio of the non-blocked stretching stage (5a, 5b, 5c, 5d, 5e) can be changed.

14. Method according to any of the preceding claims, **characterised by** the following features:
- the plastics film (2) comprises a plurality of layers;
- the extruder arrangement (3) comprises a plurality of extruders (3a, 3b, 3c, 3d, 3e), wherein each extruder (3a, 3b, 3c, 3d, 3e) is configured to discharge a plastics melt to the common die (10), wherein the plastics melts from the individual extruders (3a, 3b, 3c, 3d, 3e) form the individual layers of the plastics film (2);
and wherein the method comprises the following method steps:
- acquiring a further input by the operating terminal (7), wherein the input comprises setpoint specifications for the thicknesses of the respective layers of the fully stretched plastics film (2);
- adjusting the plastics material output quantities for each of the multiple extruders (3a, 3b, 3c, 3d, 3e) so that the plastics material output quantities of the plurality of extruders (3a, 3b, 3c, 3d, 3e) are in the same ratio as the target values for the thicknesses of the respective layers of the fully stretched plastics film (2).

15. Film stretching machine (1) for producing a plastics film (2), wherein the film stretching system (2) comprises the following features:
- a chill roll (4);
- an extruder arrangement (3) and a die (10), wherein the extruder arrangement (3) is designed to supply a plastics melt to the die (10) and wherein the plastics melt can be discharged from the die (10) onto the chill roll (4) ;
- a stretching arrangement (5) which has at least one longitudinal stretching system (5₁) which comprises at least one stretching stage (5a, 5b, 5c, 5d, 5e) in the longitudinal direction and is arranged after the chill roll (4);
- a motor arrangement (6) for driving the chill roll (4) and the stretching arrangement (5);
- an operating terminal (7);
- a memory device (12);
- a control device (8) which is configured to control the motor arrangement (6), the extruder arrangement (3) and the operating terminal (7);
wherein the control device (8) is configured to set an operating point (30) of the film stretching machine (1), wherein the operating point (30) is defined by interlinked production variables (20, 21, 22) of the film stretching machine (1), wherein:
- a first production variable (20) is a thickness of the fully stretched plastics film (20), and wherein the first production variable (20) is adjustable in a range between a minimum permissible thickness of the fully stretched plastics film (2) and a maximum permissible thickness of the fully stretched plastics film (2); and
- a second production variable (21) is a plastics material output quantity of the extruder arrangement (3), and wherein the second production variable (21) is adjustable in a range between a minimum permissible plastics material output quantity of the extruder arrangement (3) and a maximum permissible plastics material output quantity of the extruder arrangement (3);
and
- a third production variable (22) is a line speed of the film stretching machine (1), and wherein the third production variable (22) is adjustable in a range between a minimum permissible line speed of the film stretching machine (1) and a maximum permissible line speed of the film stretching machine (1);
wherein the control device (8) is further designed to acquire an input on the operating terminal, wherein the input contains:
a) a target value for the first production variable (20); or
b) a target value for the second production variable (21); or
c) a target value for the third production variable (22) ;
and wherein the control device (8) is further designed to specify
a) a setting value for the second production variable (21) and the third production variable (22) in order to achieve the target value for the first production variable (20); or
b) a setting value for the first production variable (20) and the third production variable (22) in order to achieve the target value for the second production variable (21); or
c) a setting value for the first production variable (20) and the second production variable (21) in order to achieve the target value for the third production variable (22);
and wherein the control device (8) is further configured to control the motor arrangement (6) and the extruder arrangement (6) in such a way that the operating point (30) consisting of the target value and two setting values can be achieved.

## Revendications

1. Procédé de réglage d'un point de fonctionnement (30) relatif à une installation d'étirage de feuille (1) permettant de produire une feuille de plastique (2), l'installation d'étirage de feuille (1) comprenant les particularités suivantes :
- un rouleau de refroidissement (4) ;
- un dispositif d'extrusion (3) et une filière (10), ledit dispositif d'extrusion (3) étant conçu pour apporter du plastique en fusion à la filière (10) et ledit plastique en fusion pouvant être délivré par la filière (10) sur le rouleau de refroidissement (4) ;
- un dispositif d'étirage (5) présentant au moins une installation d'étirage longitudinal (5₁) qui comprend au moins un étage d'étirage (5a, 5b, 5c, 5d, 5e) dans le sens longitudinal et qui est située en aval du rouleau de refroidissement (4) ;
- un dispositif moteur (6) destiné à entraîner le rouleau de refroidissement (4) et le dispositif d'étirage (5) ;
- un terminal d'exploitation (7) ;
- une mémoire (12) ;
- un organe de commande (8) conçu pour commander le dispositif moteur (6), le dispositif d'extrusion (3) et le terminal d'exploitation (7) ;
le point de fonctionnement (30) étant défini par des grandeurs de production (20, 21, 22) interdépendantes relatives à l'installation d'étirage de feuille (1), parmi lesquelles :
- une première grandeur de production (20) concerne l'épaisseur de la feuille de plastique (2) étirée finie, ladite première grandeur de production (20) étant réglable dans une plage comprise entre une valeur minimale admissible de l'épaisseur de la feuille de plastique (2) étirée finie et une valeur maximale admissible de l'épaisseur de la feuille de plastique (2) étirée finie, et
- une deuxième grandeur de production (21) concerne la quantité de plastique délivrée par le dispositif d'extrusion (3), ladite deuxième grandeur de production (21) étant réglable dans une plage comprise entre une valeur minimale admissible de la quantité de plastique délivrée par le dispositif d'extrusion (3) et une valeur maximale admissible de la quantité de plastique délivrée par le dispositif d'extrusion (3),
et
- une troisième grandeur de production (22) concerne la vitesse de l'installation d'étirage de feuille (1), ladite troisième grandeur de production (22) étant réglable dans une plage comprise entre une valeur minimale admissible de la vitesse de l'installation d'étirage de feuille (1) et une valeur maximale admissible de la vitesse de l'installation d'étirage de feuille (1) ;
le procédé comprenant les étapes suivantes :
- saisie (S₁) d'une entrée par le terminal d'exploitation (7), ladite entrée contenant :
a) une valeur cible relative à la première grandeur de production (20), ou
b) une valeur cible relative à la deuxième grandeur de production (21), ou
c) une valeur cible relative à la troisième grandeur de production (22) ;
- définition (S₂) de :
a) une valeur de réglage relative à la deuxième grandeur de production (21) et à la troisième grandeur de production (22) pour atteindre la valeur cible relative à la première grandeur de production (20), ou
b) une valeur de réglage relative à la première grandeur de production (20) et à la troisième grandeur de production (22) pour atteindre la valeur cible relative à la deuxième grandeur de production (21), ou
c) une valeur de réglage relative à la première grandeur de production (20) et à la deuxième grandeur de production (21) pour atteindre la valeur cible relative à la troisième grandeur de production (22) ;
- commande (S₃) du dispositif moteur (6) et du dispositif d'extrusion (3) par l'organe de commande (8) de manière à atteindre le point de fonctionnement (30) comprenant ou consistant en la valeur cible et deux valeurs de réglage.

2. Procédé selon la revendication 1, **caractérisé en ce que** les étapes suivantes sont encore réalisées :
- analyse (S₄) visant à savoir si :
a) la valeur cible relative à la première grandeur de production (20) se situe dans une plage comprise entre la valeur minimale admissible de l'épaisseur de la feuille de plastique (2) étirée finie et la valeur maximale admissible de l'épaisseur de la feuille de plastique (2) étirée finie, ou
b) la valeur cible relative à la deuxième grandeur de production (21) se situe dans une plage comprise entre la valeur minimale admissible de la quantité de plastique délivrée par le dispositif d'extrusion (3) et la valeur maximale admissible de la quantité de plastique délivrée par le dispositif d'extrusion (3), ou
c) la valeur cible relative à la troisième grandeur de production (22) se situe dans une plage comprise entre la valeur minimale admissible de la vitesse de l'installation d'étirage de feuille (1) et la valeur maximale admissible de la vitesse de l'installation d'étirage de feuille (1) ;
- émission (S₅) d'un message d'erreur ou d'une indication sur le terminal d'exploitation (7) lorsque la valeur cible se situe en dehors de la plage respective ;
- répétition (S₆) de l'étape de saisie (S₁).

3. Procédé selon la revendication 1 ou 2, **caractérisé par** les particularités suivantes :
- les valeurs de réglage sont interdépendantes par le biais de relations linéaires, étant entendu que :
a) la valeur cible relative à la première grandeur de production (20) est atteinte grâce au fait que :
i) la valeur de réglage relative à la deuxième grandeur de production (21) demeure inchangée et la valeur de réglage relative à la troisième grandeur de production (22) subit un changement, ou
ii) la valeur de réglage relative à la deuxième grandeur de production (21) subit un changement et la valeur de réglage relative à la troisième grandeur de production (22) demeure inchangée, ou
iii) les valeurs de réglage relatives à la deuxième et à la troisième grandeur de production (21, 22) sont modifiées ;
ou
b) la valeur cible relative à la deuxième grandeur de production (21) est atteinte grâce au fait que :
i) la valeur de réglage relative à la première grandeur de production (20) demeure inchangée et la valeur de réglage relative à la troisième grandeur de production (22) subit un changement, ou
ii) la valeur de réglage relative à la première grandeur de production (20) subit un changement et la valeur de réglage relative à la troisième grandeur de production (22) demeure inchangée, ou
iii) les valeurs de réglage relatives à la première et à la troisième grandeur de production (20, 22) sont modifiées ;
ou
c) la valeur cible relative à la troisième grandeur de production (22) est atteinte grâce au fait que :
i) la valeur de réglage relative à la première grandeur de production (20) demeure inchangée et la valeur de réglage relative à la deuxième grandeur de production (21) subit un changement, ou
ii) la valeur de réglage relative à la première grandeur de production (20) subit un changement et la valeur de réglage relative à la deuxième grandeur de production (21) demeure inchangée, ou
iii) les valeurs de réglage relatives à la première et la deuxième grandeur de production (20, 21) sont modifiées.

4. Procédé selon l'une des revendications précédentes, **caractérisé par** les particularités suivantes :
- la valeur de réglage relative à la première grandeur de production (20) est choisie de manière à s'écarter d'au moins 15 %, 20 %, 25 %, 30 %, 35 %, 40 % ou de plus de 45 % de la valeur maximale admissible de l'épaisseur de la feuille de plastique (2) étirée finie en direction de la valeur minimale admissible de l'épaisseur de la feuille de plastique (2) étirée finie ; et/ou
- la valeur de réglage relative à la deuxième grandeur de production (21) est choisie de manière à s'écarter d'au moins 15 %, 20 %, 25 %, 30 %, 35 %, 40 % ou de plus de 45 % de la valeur maximale admissible de la quantité de plastique délivrée par le dispositif d'extrusion (3) en direction de la valeur minimale admissible de la quantité de plastique délivrée par le dispositif d'extrusion (3) ; et/ou
- la valeur de réglage relative à la troisième grandeur de production (22) est choisie de manière à s'écarter d'au moins 15 %, 20 %, 25 %, 30 %, 35 %, 40 % ou de plus de 45 % de la valeur maximale admissible de la vitesse de l'installation d'étirage de feuille (1) en direction de la valeur minimale admissible de la vitesse de l'installation d'étirage de feuille (1).

5. Procédé selon l'une des revendications précédentes, **caractérisé par** les particularités suivantes :
- la valeur de réglage relative à la première grandeur de production (20) est choisie de manière à s'écarter d'au moins 15 %, 20 %, 25 %, 30 %, 35 %, 40 % ou de plus de 45 % de la valeur minimale admissible de l'épaisseur de la feuille de plastique (2) étirée finie en direction de la valeur maximale admissible de l'épaisseur de la feuille de plastique (2) étirée finie ; et/ou
- la valeur de réglage relative à la deuxième grandeur de production (21) est choisie de manière à s'écarter d'au moins 15 %, 20 %, 25 %, 30 %, 35 %, 40 % ou de plus de 45 % de la valeur minimale admissible de la quantité de plastique délivrée par le dispositif d'extrusion (3) en direction de la valeur maximale admissible de la quantité de plastique délivrée par le dispositif d'extrusion (3) ; et/ou
- la valeur de réglage relative à la troisième grandeur de production (22) est choisie de manière à s'écarter d'au moins 15 %, 20 %, 25 %, 30 %, 35 %, 40 % ou de plus de 45 % de la valeur minimale admissible de la vitesse de l'installation d'étirage de feuille (1) en direction de la valeur maximale admissible de la vitesse de l'installation d'étirage de feuille (1).

6. Procédé selon l'une des revendications précédentes, **caractérisé par** les étapes suivantes :
- figuration (S₇) d'une plage de travail admissible (40) sur le terminal d'exploitation (7) sous la forme d'une représentation en deux dimensions, ladite étape de figuration (S₇) comprenant les étapes supplémentaires suivantes :
a) application (S₇ₐ) de la deuxième grandeur de production (21) sur un premier axe et application de la troisième grandeur de production (22) sur un deuxième axe ;
b) ajout (S_{7b}) d'une bordure (41), les points de fonctionnement (30) admissibles se trouvant à l'intérieur de la bordure (41) et/ou sur la bordure (41).

7. Procédé selon la revendication 6, **caractérisé par** l'étape suivante :
- tracé (S₈ₐ) de droites (42) dans la bordure (41), lesdites droites (42) ayant une origine commune à partir de laquelle elles s'étendent, des premières grandeurs de production (20) de valeurs identiques se situant sur chacune des droites (42) et des premières grandeurs de production (20) se situant sur des droites (42) différentes ayant des valeurs différentes.

8. Procédé selon la revendication 6 ou 7, **caractérisé par** l'étape suivante :
- tracé (S_{8b}) du point de fonctionnement (30) à l'intérieur de la bordure (40).

9. Procédé selon l'une des revendications précédentes, **caractérisé par** les étapes suivantes :
- calcul (S₉) des valeurs de réglage maximales (45, 46) relatives à la deuxième grandeur de production (21) et à la troisième grandeur de production (22), si la valeur cible concerne la première grandeur de production (20) ;
- affichage (S₁₀) des valeurs de réglage maximales relatives à la deuxième grandeur de production (21) et à la troisième grandeur de production (22).

10. Procédé selon l'une des revendications précédentes, **caractérisé par** les étapes suivantes :
- blocage (S₁₁) d'une valeur de réglage relative à des changements concernant la première grandeur de production (20), la deuxième grandeur de production (21) ou la troisième grandeur de production (22) ;
- saisie (S₁₂) d'une entrée par le terminal d'exploitation (7), ladite entrée contenant une valeur cible relative à une grandeur de production (20, 21, 22) validée ;
- définition (S₁₃) d'une valeur de réglage relative à l'autre grandeur de production (20, 21, 22) validée ;
- commande du dispositif moteur (6) et du dispositif d'extrusion (3) par l'organe de commande (8) de manière à atteindre le point de fonctionnement (30) consistant en la valeur cible, la valeur de réglage bloquée et la valeur de réglage définie.

11. Procédé selon l'une des revendications précédentes, **caractérisé en ce que** l'étape de définition (S₂) comprend les particularités suivantes :
- lecture des deux valeurs de réglage dans une table de conversion présente dans la mémoire (12) en fonction de la valeur cible, ou
- saisie d'une autre entrée par le terminal d'exploitation (7) relativement à l'une des deux valeurs de réglage et définition automatique de l'autre valeur de réglage par l'organe de commande (8) de manière à atteindre la valeur cible avec conservation de ladite une valeur de réglage saisie.

12. Procédé selon l'une des revendications précédentes, **caractérisé par** la particularité suivante :
- la troisième grandeur de production (22) comprend une première sous-valeur et une deuxième sous-valeur ;
- la première sous-valeur de la troisième grandeur de production (22) est la vitesse à laquelle le rouleau de refroidissement (4) tourne, et la deuxième sous-valeur de la troisième grandeur de production (22) est le rapport d'étirage longitudinal, une multiplication des deux sous-valeurs produisant la troisième grandeur de production (22).

13. Procédé selon la revendication 12, **caractérisé par** les particularités suivantes :
- la deuxième sous-valeur comprend les rapports d'étirage des plusieurs étages d'étirage (5a, 5b, 5c, 5d, 5e), lesdits rapports d'étirage multipliés entre eux produisant la deuxième sous-valeur ;
- dans le cadre de l'étape de blocage (S₁₁), il est possible de bloquer une modification du rapport d'étirage d'un ou de tous les étages d'étirage (5a, 5b, 5c, 5d, 5e), de telle manière que, dans le cadre de l'étape de définition (S₁₃), concernant la valeur de réglage de la troisième grandeur de production (22), aucun rapport d'étirage ou uniquement le rapport d'étirage de l'étage d'étirage (5a, 5b, 5c, 5d, 5e) non bloqué est susceptible de changer.

14. Procédé selon l'une des revendications précédentes, **caractérisé par** les particularités suivantes :
- la feuille de plastique (2) comprend plusieurs couches ;
- le dispositif d'extrusion (3) comprend plusieurs extrudeuses (3a, 3b, 3c, 3d, 3e), chaque extrudeuse (3a, 3b, 3c, 3d, 3e) étant conçue pour délivrer du plastique en fusion au niveau de la filière (10) commune, le plastique en fusion des diverses extrudeuses (3a, 3b, 3c, 3d, 3e) formant les diverses couches de la feuille de plastique (2) ;
ledit procédé présentant les étapes suivantes :
- saisie d'une autre entrée par le terminal d'exploitation (7), ladite entrée comprenant des valeurs de consigne par défaut concernant l'épaisseur des diverses couches de la feuille de plastique (2) étirée finie ;
- adaptation de la quantité de plastique délivrée pour chacune des plusieurs extrudeuses (3a, 3b, 3c, 3d, 3e) de manière que les quantités de plastique délivrées par lesdites plusieurs extrudeuses (3a, 3b, 3c, 3d, 3e) soient dans les mêmes rapports mutuels que les valeurs de consigne par défaut concernant l'épaisseur des diverses couches de la feuille de plastique (2) étirée finie.

15. Installation d'étirage de feuille (1) permettant de produire une feuille de plastique (2), ladite installation d'étirage de feuille (2) comprenant les particularités suivantes :
- un rouleau de refroidissement (4) ;
- un dispositif d'extrusion (3) et une filière (10), ledit dispositif d'extrusion (3) étant conçu pour apporter du plastique en fusion à la filière (10) et ledit plastique en fusion pouvant être délivré par la filière (10) sur le rouleau de refroidissement (4) ;
- un dispositif d'étirage (5) présentant au moins une installation d'étirage longitudinal (5₁) qui comprend au moins un étage d'étirage (5a, 5b, 5c, 5d, 5e) dans le sens longitudinal et qui est située en aval du rouleau de refroidissement (4) ;
- un dispositif moteur (6) destiné à entraîner le rouleau de refroidissement (4) et le dispositif d'étirage (5) ;
- un terminal d'exploitation (7) ;
- une mémoire (12) ;
- un organe de commande (8) conçu pour commander le dispositif moteur (6), le dispositif d'extrusion (3) et le terminal d'exploitation (7) ;
ledit organe de commande (8) étant conçu pour régler un point de fonctionnement (30) de l'installation d'étirage de feuille (1), ledit point de fonctionnement (30) étant défini par des grandeurs de production (20, 21, 22) interdépendantes relatives à l'installation d'étirage de feuille (1), parmi lesquelles :
- une première grandeur de production (20) concerne l'épaisseur de la feuille de plastique (20) étirée finie, ladite première grandeur de production (20) étant réglable dans une plage comprise entre une valeur minimale admissible de l'épaisseur de la feuille de plastique (2) étirée finie et une valeur maximale admissible de l'épaisseur de la feuille de plastique (2) étirée finie ;
et
- une deuxième grandeur de production (21) concerne la quantité de plastique délivrée par le dispositif d'extrusion (3), ladite deuxième grandeur de production (21) étant réglable dans une plage comprise entre une valeur minimale admissible de la quantité de plastique délivrée par le dispositif d'extrusion (3) et une valeur maximale admissible de la quantité de plastique délivrée par le dispositif d'extrusion (3) ;
et
- une troisième grandeur de production (22) concerne la vitesse de l'installation d'étirage de feuille (1), ladite troisième grandeur de production (22) étant réglable dans une plage comprise entre une valeur minimale admissible de la vitesse de l'installation d'étirage de feuille (1) et une valeur maximale admissible de la vitesse de l'installation d'étirage de feuille (1) ;
ledit organe de commande (8) étant conçu en outre pour saisir une entrée sur le terminal d'exploitation, ladite entrée contenant :
a) une valeur cible relative à la première grandeur de production (20), ou
b) une valeur cible relative à la deuxième grandeur de production (21), ou
c) une valeur cible relative à la troisième grandeur de production (22) ;
ledit organe de commande (8) étant en outre conçu pour définir :
a) une valeur de réglage relative à la deuxième grandeur de production (21) et à la troisième grandeur de production (22) pour atteindre la valeur cible relative à la première grandeur de production (20), ou
b) une valeur de réglage relative à la première grandeur de production (20) et à la troisième grandeur de production (22) pour atteindre la valeur cible relative à la deuxième grandeur de production (21), ou
c) une valeur de réglage relative à la première grandeur de production (20) et à la deuxième grandeur de production (21) pour atteindre la valeur cible relative à la troisième grandeur de production (22) ;
et ledit organe de commande (8) étant conçu en outre pour commander le dispositif moteur (6) et le dispositif d'extrusion (6) de manière à atteindre le point de fonctionnement (30) consistant en la valeur cible et deux valeurs de réglage.
